# EUROPEAN PATENT SPECIFICATION

(11) **EP 1 793 981 B1**
(45) Date of publication and mention of the grant of the patent: **12.08.2009**
(21) Application number: 04787600.8
(22) Date of filing: 20.09.2004
(51) Int. Cl.: B29D 30/10, B29D 30/12, B29D 30/08, B29D 30/20, B29D 30/36

(54) **A METHOD AND A PLANT FOR MANUFACTURING TYRES**
VERFAHREN UND ANLAGE ZUR HERSTELLUNG VON REIFEN
PROCEDE ET INSTALLATION DE CONFECTION DE PNEUMATIQUES

(43) Date of publication of application: 13.06.2007
(73) Proprietor: PIRELLI TYRE S.p.A., 20126 Milano (IT)
(72) Inventor: MANCINI, Gianni, c/o Pirelli Tyre S.p.A., I-20126 Milano (IT)
(74) Representative: Tansini, Elio Fabrizio
(86) International application number: PCT/IT2004/000510
(87) International publication number: WO 2006/033120

(56) References cited:
- WO-A-03/053662
- US-A- 3 909 337
- US-A- 4 877 468
- US-A- 5 853 526
- US-B1- 6 318 432

## Description

The present invention relates to a method of manufacturing tyres, and to a plant for manufacturing tyres operating in accordance with said method.

The main constituent elements of a tyre generally comprise a carcass structure including at least one carcass ply having end flaps engaged with respective annular anchoring structures, said anchoring structures being each usually formed of a substantially circumferential annular insert currently referred to as bead core, to which, at a radially external position, at least one filling insert is applied.

Associated with the carcass structure is a belt structure comprising one or more belt layers, disposed in radial superposition with respect to each other and to the carcass ply and having textile or metallic reinforcing cords with a crossed orientation and/or substantially parallel to the circumferential extension direction of the tyre. Applied to the belt structure at a radially external position is a tread band of elastomer material in which a raised pattern for tyre contact with the ground is formed.

It is to be pointed out, to the aims of the present description that by the term "elastomer material" it is intended a composition comprising at least one elastomeric polymer and at least one reinforcing filler. Preferably this composition further comprises additives such as a cross-linking agent and/or a plasticizer. Due to the presence of the cross-linking agent, this material can be cross-linked through heating, so as to form the final article of manufacture. In addition, respective sidewalls of elastomer material are applied to the side surfaces of the carcass structure, each extending from one of the side edges of the tread band until close to the respective annular anchoring structure to the beads.

The carcass structure and belt structure, together with the respective tread band, can be made separately from each other in respective work stations, to be mutually assembled at a later time.

According to conventional manufacturing methods, the tread band and sidewalls are made each from a continuously extruded section member that, after cooling for stabilising its geometrical conformation, is stored on suitable tables or reels. The semifinished product in the form of sections or a continuous strip is then sent to a feeding unit the task of which is to pick up the sections or cut the continuous strip into sections of predetermined length, each of them constituting the tread band or one of the sidewalls to be circumferentially applied to the tyre under working.

[Document US 4,877,468 describes a plant for manufacturing tyres which essentially comprises a carcass assembling line according to the so called "flat-tyre method" (i.e. through laying the semifinished components on a substantially cylindrical drum), a belt manufacturing line, a work station for applying the belt to the carcass, a work station for applying the tread band, and a vulcanization station.

Document WO 03/053662 describes a carcass building line, in which the carcasses are manufactured through laying of elementary components on a substantially toroidal building support.]

As described in document US 3,380,872, the carcass plies and annular anchoring structures of a tyre are assembled on a reference support comprising a membrane having circumferential edges in engagement with respective opposite circular flanges keeping the membrane taut according to a cylindrical conformation. When assembling of the carcass structure is completed, compressed air is admitted into the membrane to radially expand it and give it a toroidal conformation. Should the conformation be insufficient, the opposite flanges can be mutually approached. The other constituent elements of the tyre, such as the belt structure, tread band and sidewalls, can be applied to the carcass structure thus formed. The manufactured tyre is then removed from the reference support to be subsequently vulcanised.

Document US 5,853,526 discloses formation of the green tyre through assembly of its constituent elements using an inflatable bladder as the reference support, said bladder being inflated to a predetermined pressure and being subsequently introduced into a vulcanisation mould together with the green tyre formed on said support.

In accordance with documents US 6,318,432, US 6,635,132 and US 2002-029841 in the name of the same Applicant, each constituent element of the tyre is formed through direct application on a toroidal rigid building support of one or more elementary components such as elongated elements or strips of elastomer material, rubberised metallic or textile cords, strip-like elements of rubberised cords, or others, so as to enable manufacture of tyres without requiring that a plurality of semifinished products be manufactured and stored.

The Applicant realised that generally, in the production plants of the conventional type the production lines for the belts and/or the tread band, and in particular the equipment associated therewith for manufacture of the semifinished products are conceived and structured for a high production capacity that is usually in excess with respect to the production capacity of the equipment designed to handle the semifinished products designed to form the belt structures, and/or of the carcass structure manufacturing lines.

To the aims of the present description, by "production plant of the conventional type" it is intended a production plant in which the tyre is obtained through assembling of a plurality of semifinished products (e.g. liners, carcass plies, bead cores, sidewalls, belt structure, tread band) made separately in distinct work stations with respect to the manufacturing line of the tyre.

Starting from the above remark, the Applicant has perceived the possibility of increasing exploitation of the unsaturated production plants of the conventional type and therefore increasing the overall production capacity of said plants by integrating into these conventional lines, production steps contemplating manufacture of the carcass structure through laying of elementary components on a rigid toroidal support.

In other words, the Applicant has perceived the possibility of increasing the production capacity of a plant of the conventional type by implementing a saturation of the production lines of the belts and/or the tread band, and/or the equipment interlocked with the latter for the supply of semifinished products, by integrating the plant itself with stations carrying out the manufacture of carcass structures through laying of elementary components on a toroidal support, said elementary components consisting of strip-like elements of elastomeric material alone, or strip-like elements of elastomer material incorporating reinforcing elements (generally textile or metallic cords), rubberised cords or rubberised metallic wires.

In accordance with the present invention, the Applicant has found that in a tyre manufacturing plant in which the carcass structures are made of elementary components, the presence of a building support comprising an expandable bladder can be advantageously utilised for application to the carcass structure of a belt structure and possibly a tread band, previously made as semifinished products in an annular form.

In addition, the Applicant has become aware of the fact that if a belt structure already obtained as a semifinished product of annular form is applied to the carcass structure - made of elementary components - stresses due to formation of the belt structure through application of strips directly on the carcass structure are avoided to the inflatable bladder. Therefore it is advantageously possible to use an inflatable bladder that is less rigid and consequently more adapted to be expanded without too many difficulties.

It is an object of the present invention to provide a plant for manufacturing tyres according to the wording of claim 1.

It is a further object of the present invention to provide a method of manufacturing tyres comprising the steps as recited in claim 29.

Preferred embodiments of the invention are defined in the dependent claims.

In more detail, it is an object of the present invention to provide a plant for manufacturing tyres, comprising: a carcass-assembling line comprising devices for forming assembled carcass structures through laying of semifinished components on an assembling support; a carcass-building line comprising devices for forming built carcass structures through laying of elementary components on a building support; a belt manufacturing line; devices for belt application designed to apply an annular belt structure manufactured in said belt-manufacturing line, at a radially external position, to each of said assembled carcass structures and built carcass structures; a work station in which tread bands are supplied at a radially external position to said annular belt structures; and a vulcanisation and moulding station for the thus obtained tyres.

In accordance with a further independent aspect of the present invention, the building support comprises an inflatable bladder having coaxially spaced apart circumferential edges; said carcass-building line comprising: inflation devices to bring the inflatable bladder to an inflated condition so as to have a substantially toroidal shape with an outer surface thereof conforming in shape to an inner surface of said built carcass structures.

Preferably, the devices for application of the belt structures comprise: positioning devices operating on the belt structure to support it at a coaxially centred position around the built carcass structure, formed on the building support; and devices for expanding the inflatable bladder from the inflated condition, at which the built carcass structure formed thereon has a maximum diameter smaller than an inner diameter of the belt structure, to a radial-expansion condition at which the built carcass structure is applied against the belt structure.

This inventive aspect, also exploitable irrespective of the presence of two distinct lines for manufacturing the carcasses, enables an annular belt structure to be applied to a carcass structure made through laying of elementary components, without being obliged to remove the carcass structure itself from the support element used for manufacture of same.

It is a further object of the present invention to provide a method of manufacturing tyres comprising the steps of: applying semifinished components onto an assembling support so as to form assembled carcass structures; applying a plurality of elongated elementary components onto a building support so as to form built carcass structures; making annular belt structures in a belt-manufacturing line; applying at least one of said belt structures at a radially external position to each of said assembled carcass structures and built carcass structures; associating a tread band at a radially external position to each annular belt structure, and vulcanising and moulding the thus obtained tyres.

In a further independent inventive aspect, the elementary components are laid on an inflatable bladder associated with the building support and set in an inflated condition so as to have an outer surface thereof conforming in shape to an inner surface of said built carcass structures.

Preferably, application of the belt structures to the built carcass structures comprises the steps of: arranging the belt structure at a coaxially centred position relative to the built carcass structure formed on the inflatable bladder; radially expanding the inflatable bladder to apply the built carcass structure against the belt structure.

Further features and advantages will become more apparent from the detailed description of a preferred but not exclusive embodiment of a manufacturing plant adapted to put said method into practice.

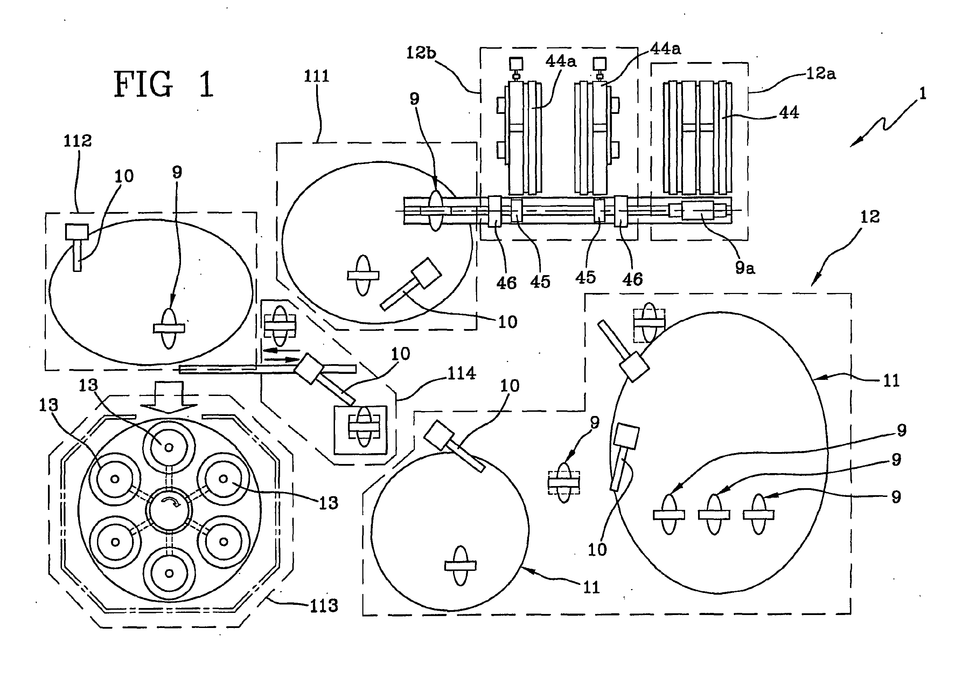

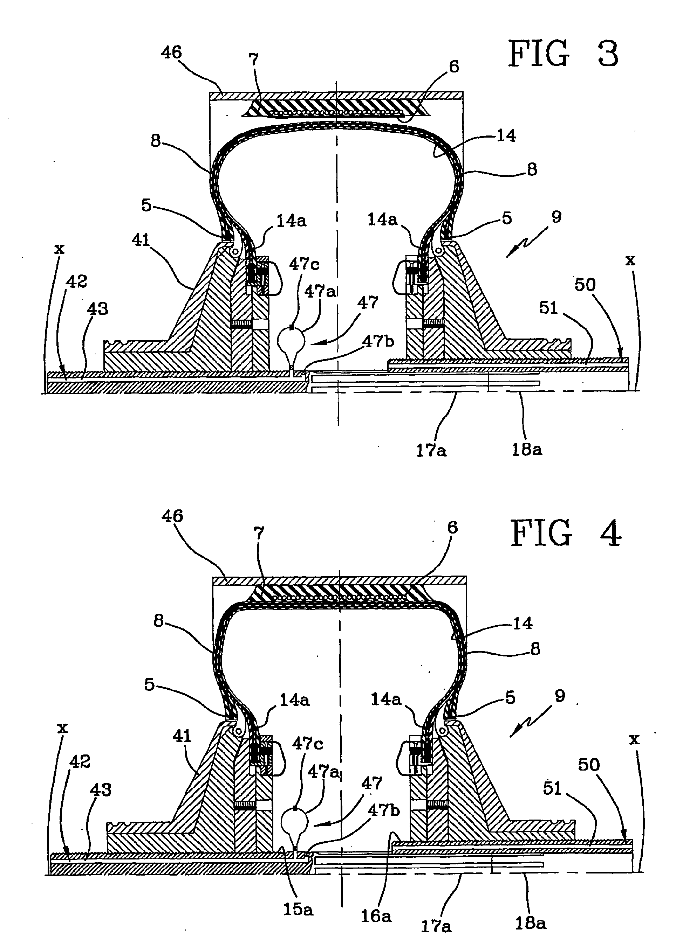

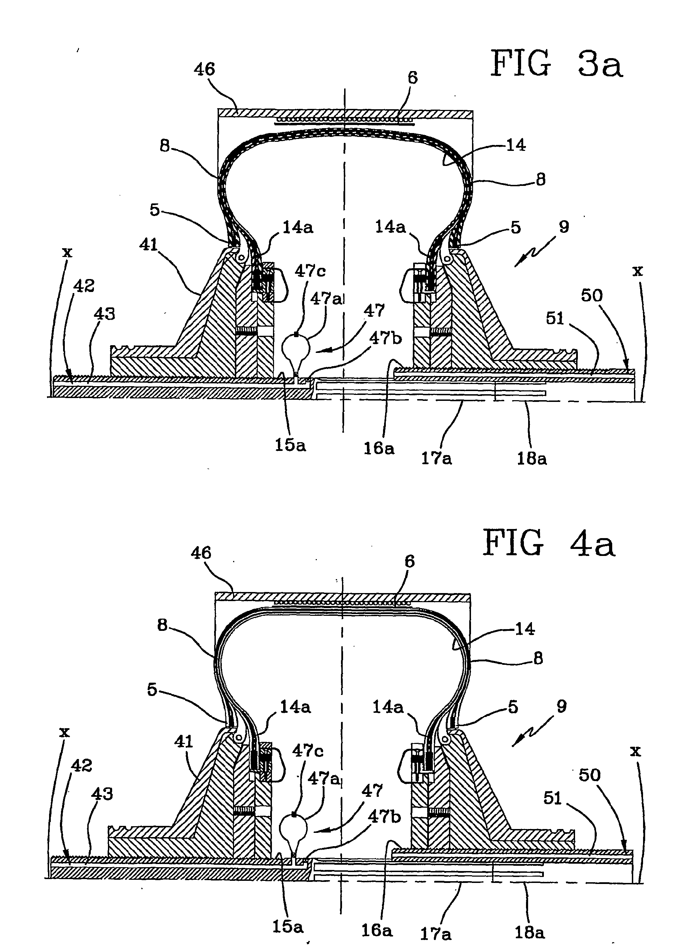

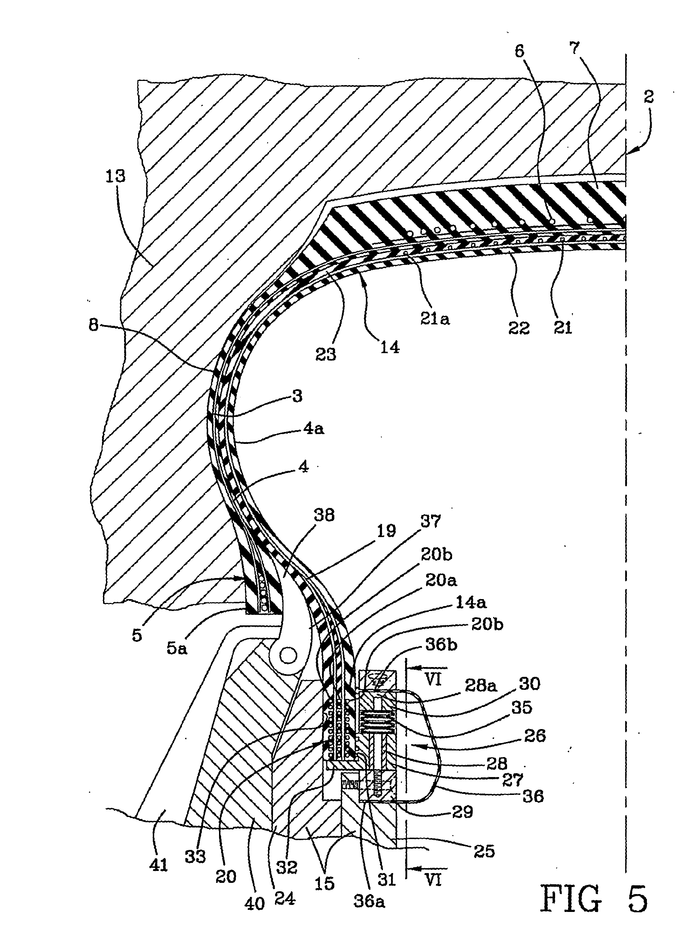

This description will be set out hereinafter with reference to the accompanying drawings given by way of non-limiting example, in which:
- Fig. 1 is a diagrammatic plan view of a plant for tyre production in accordance with the present invention;

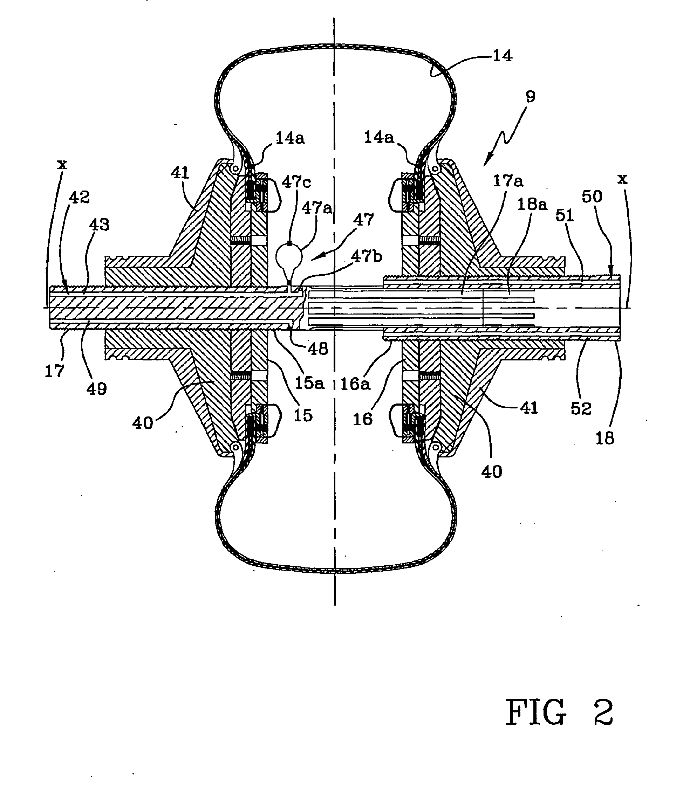

- Fig. 2 diagrammatically shows a carcass-building support being part of the plant in reference, in a diametrical section, with the inflatable bladder in an inflated condition;
- Figs. 3 and 3a show a transfer device carrying a belt structure associated with a tread band and, respectively, a belt structure alone set coaxially around a carcass structure formed on the carcass-building support of Fig. 2;
- Figs. 4 and 4a show the building support in Fig. 3 in a condition of radial expansion, to cause engagement between a built carcass structure and, respectively, the belt structure associated with the tread band and the belt structure alone carried by the transfer device,;
- Fig. 5 shows a detail to an enlarged scale of the building support with the manufactured tyre, within a vulcanisation mould;

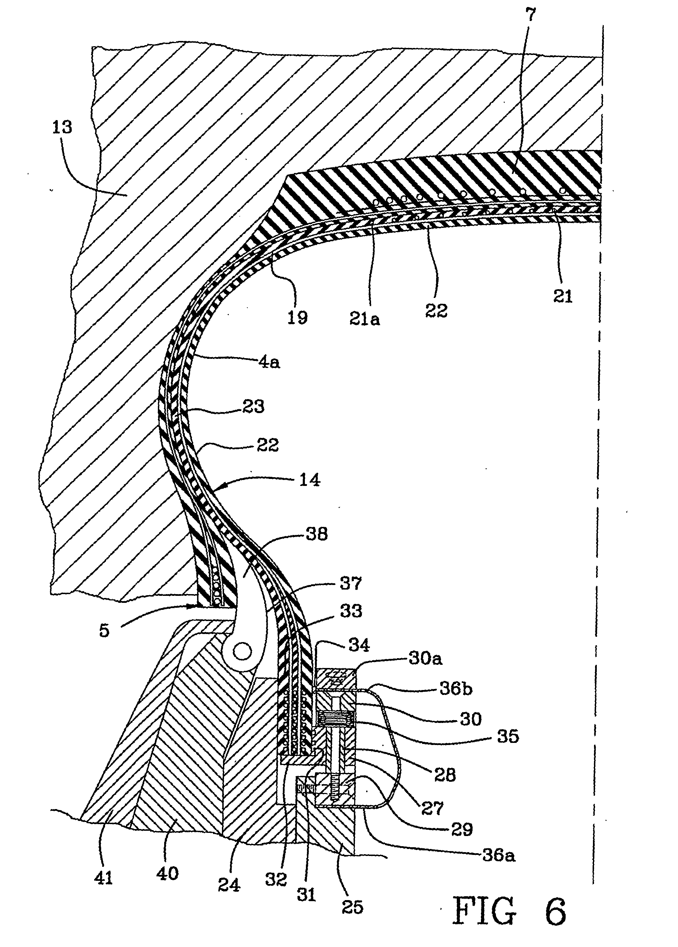

- Fig. 6 shows the detail in Fig. 5, with the carcass-building support in an over-inflated condition;

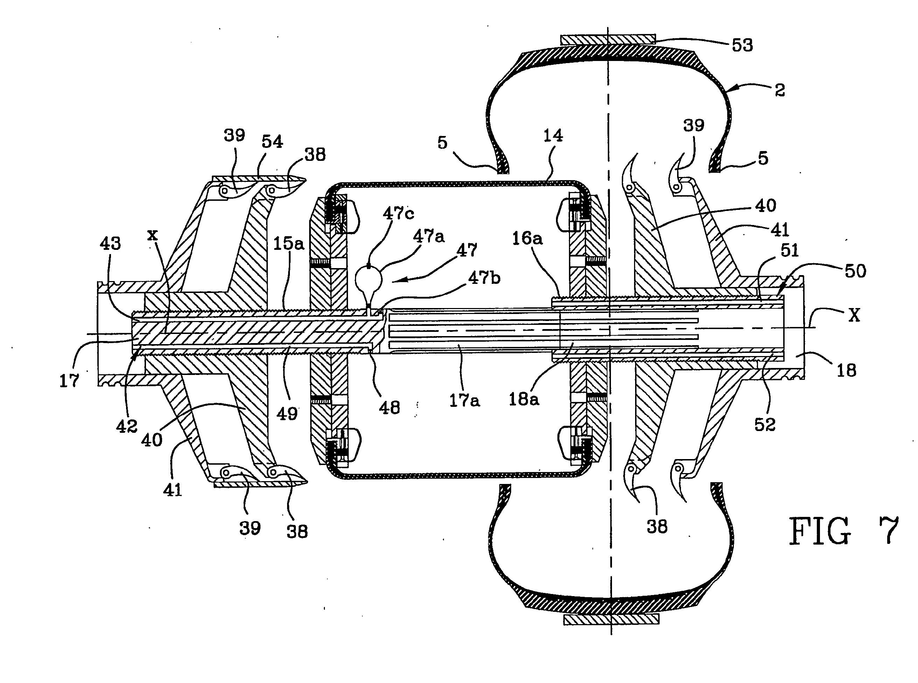

- Fig. 7 shows the carcass-building support during removal of the finished tyre;

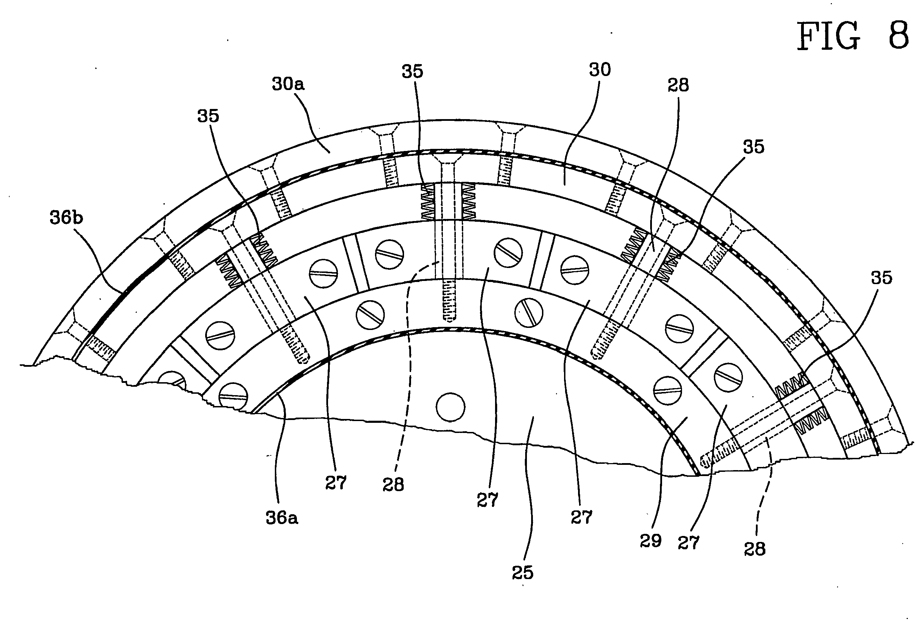

- Fig. 8 partly shows one of the anchoring flanges of the carcass-building support, sectioned along line VI-VI in Fig. 5.
   With reference to the drawings, a plant for manufacturing tyres for vehicle wheels in accordance with the present invention has been generally identified by reference numeral 1.
   Plant 1 is dedicated to the manufacture of tyres 2 essentially comprising (see in particular Fig. 5) a carcass structure 3 including: at least one carcass ply 4, internally coated with a layer of an airtight elastomer material or a so-called "liner" 4a; and two annular anchoring structures 5a in engagement with the circumferential edges of the carcass structure 3 close to the regions usually identified with the name of "beads" 5. Tyre 2 further comprises a belt structure 6 circumferentially applied to the carcass ply 4, a tread band 7 circumferentially superposed on the belt structure 6 and two sidewalls 8 applied to the carcass ply 4 at laterally opposite positions and each extending from the corresponding bead 5 to the corresponding side edge of the tread band 7.
   Preferably, the belt structure 6 comprises at least two radially superposed layers formed of a rubberised fabric provided with usually-metallic reinforcing cords disposed parallel to each other in each layer and in crossed relationship relative to the cords of the adjacent layer, preferably arranged in a symmetric manner with respect to the equatorial plane of the tyre, said at least two layers forming the so-called "crossed layers" of the belt structure. Preferably, also associated with the belt structure 6, at a position radially external to the two above mentioned layers, is a layer of textile or metallic cords disposed in a substantially circumferential direction, said cords being defined by at least one elongated element wound up into circumferential coils disposed in axial side by side relationship at a position radially external to the underlying belt layers mentioned above. Said further layer forms the so-called "zero-degree layer" of the belt structure.
   The plant 1 for manufacturing tyres 2 comprises at least one carcass-assembling line of the conventional type, generally denoted at 12a, dedicated to the manufacture of carcass structures 3 obtained through assembling of semifinished components. In the present specification, the carcass structures 3 obtained on the assembling line are identified as "assembled carcasses".
   The assembling line 12a essentially comprises a carcass-assembling support 9a consisting of a drum for example that is suitable for manufacturing the assembled carcass structures 3 following a known process usually called "unistage process". Alternatively, the assembling support 9a can be combined with a shaping drum (not shown) to make assembled carcass structures 3 following a manufacturing process of the type called "two-stage process".
   The assembling support 9a is interlocked with one or more feeding lines 44 entrusted with the task of supplying semifinished components for obtaining the assembled carcass structures 3, such as the carcass plies 4, annular reinforcing elements 5a, possibly the sidewalls 8 and/or other components, that are obtained from semifinished products coming from the preceding working and storage steps.
   Plant 1 further comprises at least one carcass-building line generally denoted at 12 in Fig. 1, dedicated to obtaining carcass structures 3 built by means of elementary components. In the course of the present specification, and in the claims, the carcass structures 3 obtained on the building line 12 are identified as "built carcasses" for the only purpose of distinguishing them from the "assembled carcasses" obtained along the assembling line 12a.
   The building line 12 comprises one or more carcass-building supports 9 each of which, through one or more robotized arms 10 or other transfer devices, is sequentially brought to interact with one or more manufacturing stations 11 located along the building line 12 to cause manufacture of built carcass structures 3, through production and assembly of the above listed constituent elements, following a predetermined sequence 3, 4, 4a, 5, 8.
   The manufacturing plant 1 further comprises at least one conventional belt-manufacturing line 12b of the type usually combined with the assembling line 12a carrying out formation of the assembled carcass structures 3 in a conventional manner. This belt-manufacturing line 12b comprises devices for applying the belt structure 6 at a radially external position to each of said assembled carcass structures and built carcass structures 3 coming from the carcass-assembling line 12a and the carcass-building line 12, respectively. The devices for belt application will be described in more detail in the following, referring particularly to the interaction of same with the carcass-building line 12, while they will not be described in detail as regards their interaction with the assembling line 12a, as the latter can be made in a manner known by itself.
   In accordance with the embodiment shown in Fig. 1, the manufacturing plant 1 comprises a work station 111 in which the built carcass structure 3 obtained in the building line 12 is coupled (as better described in the following) with the belt structure 6 obtained in the belt-manufacturing line 12b.
   In addition, in accordance with the embodiment shown in Fig. 1, the manufacturing plant 1 comprises a work station 112 in which a tread band 7 is applied at a radially external position to the belt structure 6, as better detailed in the following of the present specification.
   When manufacture of a tyre has been completed, each green tyre 2, with the aid of one of the robotized arms 10 for example, or other suitable transfer device, is transferred to a vulcanisation and moulding station 113 comprising one or more moulds 13 to carry out vulcanisation of tyre 2.
   Each of the building supports 9 used along the carcass-building line 12, as well as in the above mentioned stations 111 and 112 and possibly also in the vulcanisation and moulding station 113, essentially comprises an inflatable bladder 14 having axially spaced apart circumferential edges that are in engagement with a first and a second anchoring flanges 15, 16, respectively. The first and second anchoring flanges 15, 16 are fastened to a first and a second shafts 17, 18 respectively, that are in telescopic relationship with each other. For the purpose, the first shaft 17 can be for example provided to be coaxially insertable in the second shaft 18 that is internally hollow, by means of a splined joint 17a, 18a making them rigidly connected during rotation. A locking member not shown, comprising a mechanical hooking for example, to be operated mechanically, electromagnetically, pneumatically or in a different manner, ensures a steady axial locking between the first and second shafts 17, 18, with possibility of releasing them from each other, for purposes better specified in the following.
   Advantageously, engagement of at least one of the anchoring flanges 15, 16 with the respective shaft 17, 18 can take place by screwing. In a preferential solution both flanges 15, 16 are fastened on the respective first and second shafts by means of first and second threads 15a, 16a respectively having respectively opposite screwing directions. Due to the above, a mutual axial movement of the anchoring flanges 15, 16 can be caused by imparting a rotation to shafts 17, 18.
   Preferably, the inflatable bladder 14 has a radial reinforcing structure 19 made up of textile or metallic cords disposed in planes radial to a geometrical rotation axis X-X, and each extending between the opposite circumferential edges 14a of the inflatable bladder itself. Formed in the vicinity of each circumferential edge 14a is an annular anchoring structure 20 comprising annular inserts 20a, 20b each consisting of one or more textile or metallic cords wound up to form radially superposed coils. In the embodiment shown, integrated into each circumferential edge 14a of the inflatable bladder 14 is a central annular insert 20a interposed between two rows of cords belonging to the radial reinforcing structure 19 and in superposed relationship in an alternated sequence on the axially inner and axially outer side respectively of the central insert itself. Also provided are two side inserts 20b disposed respectively at an axially inner and axially outer position with respect to the cords of the radial reinforcing structure 10.
   Associated with the radial reinforcing structure 19 is a belting structure 21 comprising one or more textile or metallic cords, circumferentially wound up to form coils disposed close to each other externally of the radial reinforcing structure 10, at a region confined between two axially opposite edges 21a of the belting structure, suitably spaced apart from the circumferential edges 14a of the inflatable bladder 14.
   The belting structure 21 can consist of one or more cords comprising 2 to 5 metal filaments with a diameter included between 0.08 mm and 0.3 mm. The cord or cords can form coils disposed with a thickness included between 50 and 135 cords/dm. Each cord preferably has an ultimate strength included between 250 and 550 Newtons, with elongation of 0.5% for a strength included between 1/7 and 1/8 of the ultimate strength.
   In a preferential solution, the radial reinforcing structure 19 is made up of metallic cords distributed with a thickness included between 50 and 180 cords/dm and each comprising two to five filaments of steel having a diameter included between 0.06 mm and 0.2 mm. Each cord has an ultimate strength included between 45 and 165 Newtons, with an elongation of 0.5% for a strength included between 1/3 and 1/5 of the ultimate strength.
   Each annular reinforcing insert 20a, 20b can in turn be formed of a cord comprising 2 to 12 metallic filaments having a diameter included between 0.2 mm and 0.45 mm. The ultimate strength of the cord is preferably included between 550 and 1850 Newtons, with an elongation corresponding to 0.5% for a strength included between 1/6 and 1/7 of the ultimate strength.
   The reinforcing inserts can be integrated, together with the ends of the cords forming the radial reinforcing structure, into high-modulus elastomeric fillers with a hardness just as an indication in the order of 70° and 92° Shore A, arranged close to the end edges 14a of the inflatable bladder 14.
   The inflatable bladder 14 is also provided to be preferably coated on its inner surface with a layer of highly impermeable elastomer material 22, a butyl-based blend for example. The outer surface of the inflatable bladder 14 on the contrary is preferably coated with a layer of unsticky material 23, a silicone-based blend or PTFE (polytetrafluoroethylene) for example.
   Since the process in accordance with the present invention comprises the step of manufacturing the belt structure 6 of a tyre, or at least part of said belt structure, in a production line 12b of the conventional type, the structure of the inflatable bladder 14 of the building support 9 is not required to be able to withstand the stresses resulting from the step of laying the belt structure 6 (said belt structure being in fact made in a conventional separated line and, therefore not directly on the inflatable bladder referred to above). Therefore this enables accomplishment of an inflatable bladder having a simplified structure as compared with that which has been previously illustrated.
   In addition, by virtue of the fact that the process in accordance with the invention uses a building support 9 comprising an inflatable bladder 14, it is possible to disengage the green tyre 2 from the support itself, if the vulcanisation step is wished to be conducted in a conventional line, i.e. without introducing said support into the vulcanisation mould.
   Each of the anchoring flanges 15, 16 comprises an axially external flange half 24 and an axially internal flange half 25 incorporating radial-sliding members 26 engaging the corresponding circumferential edge 14a of the inflatable bladder 14 in such a manner that the circumferential edge is movable in a radial direction.
   In more detail, the radial-sliding members 26 contemplate the arrangement of a plurality of circumferentially distributed blocks 27 in the vicinity of the perimetral edge of at least one of the flange halves 24, 25, in the case herein illustrated on the axially internal flange half 25. Each block 27 is slidably guided in a radial direction along at least one guide element 28 extending through the block itself and rigidly engaged between a first circumferential ring 29 and a second circumferential ring 30 that are concentric and fastened to the axially internal flange half 25 by means of screws 28a longitudinally passing through the guide elements 28 associated with the different blocks 27, for example.
   Each block 27 has a grip surface 31 acting in thrust relationship against the surface of the inflatable bladder 14 close to its inner circumferential edge 14a, and an abutment lug 32 jutting out in an axial direction to supply a further rest seat to said inner circumferential edge.
   The grip surface 31 is preferably provided with ribs extending in a substantially circumferential direction to efficiently retain the inflatable bladder 14 and thus prevent slipping off of the same in a radial direction relative to the block 27.
   The circumferentially distributed blocks 27 act in thrust relationship against the circumferential edge 14a of the inflatable bladder 14, against the action of a radial abutment surface 33 formed in the axially external flange half 24. In other words, each of the circumferential edges 14a of the inflatable bladder 14 is enclosed between the blocks 27 carried by the axially internal flange half 25 and the radial abutment surface 33 formed on the axially external flange half 24.
   The first and second anchoring flanges 15, 16 are preferably provided to be each associated with at least one circumferential seal 34 set to act against the inflatable bladder 14 to hermetically isolate the inner part thereof from the external environment. This circumferential seal can be placed, for example, at the second circumferential ring 30, radially external to the first circumferential ring 29 and can possibly extend towards the geometrical axis X-X, to act in sliding-contact relationship against the inner surface of the inflatable bladder 14. The outer surface of the inflatable bladder 14 can be also slidably and sealingly engaged against the radial abutment surface 33 formed on the axially external flange half 24, upon possible interposition of a second circumferential seal (not shown). The radial abutment surface 33 can be coated with a layer of antifriction material, Teflon^{®} for example.
   Elastic return members 35, consisting of Belleville washers fitted on the elements 28 for example, constantly urge each block 27 towards the geometric axis X-X of the inflatable bladder 14.
   It may be also provided that an annular membrane 36 should be associated with each anchoring flange 15, 16; said annular membrane 36 has a radially internal circumferential edge 36a and a radially external circumferential edge 36b sealingly fastened to the anchoring flange at a radially external and radially internal positions relative to the radial sliding members 26, respectively. In particular, the radially internal edge 36a of the annular membrane 36 can be sealingly enclosed between the axially internal flange half 25 and the first circumferential ring 29, while the radially external edge 36b can be enclosed between the second circumferential ring 30 and a third circumferential ring 30a fastened to the second ring 30. Said circumferential seal 34 can be formed on the end of the radially external edge 36b of the annular membrane 36.
   Combined with each of the anchoring flanges 15, 16 is an annular abutment flange 37 to be positioned against an outer side surface of the inflatable bladder 14, to supply a rest surface to the inner surface of tyre 2 close to a respective bead 5 of said tyre. Each of these annular abutment flanges 37 is divided into a plurality of circumferential sectors 38, 39 that are each movable between an operating position at which they have a substantially radial orientation relative to the geometrical axis X-X of the inflatable bladder 14, and a rest position at which they are radially retracted to allow disengagement of the tyre 2 from the building support 9.
   In more detail, first circumferential sectors 38 and second circumferential sectors 39 are provided, said sectors being distributed in an alternated sequence and being engaged with a first hub 40 and a second hub 41 respectively, that are axially movable with respect to each other and can be positioned in an approached relationship with the respective anchoring flange 15, 16. The first hub 40 of each anchoring flange 15, 16 is preferably-engaged by screwing on the first shaft 17 or on the second shaft 18 respectively, so that, when it abuts against the respective anchoring flange 15, 16, rotational locking of said flange relative to the corresponding shaft 17, 18 is caused.
   The second hub 41 can be axially approached relative to the first hub 40 so that it lends itself to interpose the second circumferential sectors 39 between the first circumferential sectors 38 carried by the first hub 40, in a surface continuity relationship therewith.
   Torsion springs or other suitable elastic members operate between each circumferential sector 38, 39 and the corresponding hub 40, 41 to keep the circumferential sectors in the operating condition.
   Also associated with the inflatable bladder 14 are inflating devices 42 to admit fluid under pressure into said bladder and make it have such an inflated condition that it becomes of a substantially toroidal shape with an outer surface conforming in shape to the inner surface of the green tyre 2 to be manufactured. These inflating devices can for example comprise a fluid-admitting duct 43 to admit a fluid under pressure (air for example), said duct being longitudinally formed through the first shaft 17 and being connected with a feeding source for said fluid under pressure arranged along the carcass-building line 12. In more detail, the admitting duct 43 of the first shaft 17 is preferably connected with said feeding source during a starting step of the tyre working cycle to set the inflatable bladder 14 to the inflated condition.
   Preferably, during admission of fluid under pressure into the inflatable bladder 14 a control on the geometrical configuration of the bladder itself is carried out so as to operate interruption of said fluid admission when the bladder 14 has reached a predetermined size. More particularly, members (not shown in the drawings) adapted to detect the geometrical configuration of the inflatable bladder 14 can be provided for the purpose; said members for example comprise one or more photoemitters operating at different points of the extension outline of bladder 14 and each generating a light beam to be intercepted by the inflatable bladder when the inflated condition is reached. Combined with the photoemitters are respective photoreceivers set to receive the respective light beams directly coming from the photoemitters or reflected by the surface of the inflatable bladder 14 to operate interruption of fluid admission as soon as the light beam of the photoemitter is intercepted by the outer surface of the inflatable bladder. It is to be noted that with use of laser photoemitters a very precise control of the geometrical configuration of the inflatable bladder 14 can be obtained, even with tolerances of less than 0.1 mm.
   On reaching the inflated condition, the inflatable bladder 14 is inflated to a pressure of a value that just as an indication is lower than 5 bars.
   Due to the rigidity of the elastic return members 35, blocks 27 are maintained in a radially retracted position when the bladder is in an inflated condition.
   Once the inflated condition of the inflatable bladder 14 has been reached, the building support 9 lends itself to receive the different constituent elements of the built carcass structure 3 that are assembled thereon in the different work steps along the carcass-building line 12.
   In detail, in manufacturing each of the built carcass structures 3 along the carcass-building line 12 it is provided that at least part or all of the constituent elements 4, 4a, 5 should be made by directly applying on the building support 9, one or more elementary components, such as elongated elements or strips of elastomer material, rubberised metallic or textile cords, strip-like elements made of rubberised cords or other, as described in document US 6,457,504 in the name of the same Applicant, for example.
   More specifically, formation of the built carcass structure 3 can start with formation of the impermeable liner 4a through winding of a continuous strip of raw elastomer material into coils disposed consecutively close.to each other starting from one of the annular abutment flanges 37, in the region corresponding to one of the tyre 2 beads, to cover the outer surface of the inflatable bladder 14 until the annular abutment flange 37 placed on the opposite side of the bladder itself is reached. Advantageously, the continuous strip can be supplied from an extruder directly onto the outer surface of the building support 9, while said support is supported, at one or both shafts 17, 18 for example, by one of the robotized arms 10 or other device adapted to drive it in rotation and conveniently move it in the vicinity of the extruder so as to obtain the desired coil distribution.
   The carcass ply 4 can be advantageously formed with the aid of members adapted to lay a plurality of strip-like elements of rubberised cords in circumferential succession on the building support 9, each of said strip-like elements comprising textile or metallic cords parallel to each other, at least partly incorporated in a layer of elastomer material. During laying, the building support 9 can be supported, at one or both shafts 17, 18 for example, by one of the robotized arms 10 or other device adapted to drive it sequentially in rotation with a predetermined angular pitch, in accordance with the laying sequence of the strip-like elements of rubberised cords.
   Formation of each annular anchoring structure 5a is then carried out close to the respective inner circumferential edge of the built carcass structure 3, through members designed to supply and apply, at the respective annular abutment flange 37, at least one rubberised metallic cord or other continuous elongated element resisting to tensile stresses.
   Simultaneously, the building support 9 can be supported by one of the robotized arms 10 or other device suitable to drive it in rotation and conveniently move it close to the member supplying the continuous elongated element, so as to cause winding of the latter into coils radially superposed around the geometric axis of the building support itself.
   As described above, tyre 2 also comprises the sidewalls 8 that, depending on the different embodiments, can have respective radially external end edges superposed on the side edges of the tread band, to form one design scheme of the type usually referred to as "overlying sidewalls", or interposed between the carcass structure and the side edges of the tread band, in accordance with a design scheme of the type referred to as "underlying sidewalls".
   Generally, the sidewalls 8 are made through winding of at least one continuous strip of raw elastomer material into coils disposed consecutively close to each other and conveniently superposed to give each of the sidewalls the desired structural conformation.
   According to the above mentioned "underlying sidewalls" design scheme, after manufacture of the sidewalls 8, the carcass structure 2 thus completed on the building support 9 lends itself to be coupled with the belt structure 6 made in the belt-manufacturing line 12b of the conventional type.
   The belt structure 6 can be made for example, starting from one or more semifinished products in the form of a continuous tape coming from respective feeding lines 44a to be cut to size in accordance with the circumferential extension of the belt structure 6 to be made, and subsequently wound up on at least one collapsible drum 45 so that each will form a so-called belt layer. Alternatively, the belt structure 6 can be made by directly forming the semifinished products in the form of a tape having a desired length in the same belt-manufacturing line 12b carrying the collapsible drum 45, as described in document US-2002/062908 in the name of the same Applicant, for example.
   At least one transfer member diagrammatically denoted at 46 picks up the belt structure 6 from the respective collapsible drum 45 to arrange it, at the work station 111 of Fig. 1, in a coaxially centred position around the built carcass structure 3, formed on the inflatable bladder 14 under inflated conditions as shown in Figs. 3 and 3a. A further transfer member 46 can be designed for transfer of the belt structures 6 from a respective collapsible drum 45 to the assembled carcass structures 3 obtained in the assembling line 12a. It is to be pointed out that positioning of the belt structure 6 around the built carcass structure 3 can be obtained through an axial movement of the transfer member 46 and/or of the building support 9 carried by one of the robotized arms 10.
   As shown in Figs. 3 and 3a, the built carcass structure 3 formed on the inflatable bladder 14 under inflated conditions has a maximum diameter suitably smaller than the inner diameter of the belt structure 6, so that it can be coaxially inserted thereinto without mechanical interferences.
   When positioning is over, as shown in Figs. 4 and 4a, a step of radial expansion of the inflatable bladder 14 starting from the inflated condition is operated, so as to radially expand the built carcass structure 3 until bringing the carcass ply 4 into contact with the inner surface of the belt structure 6, held by the transfer member 46.
   Shown in Figs. 3 and 4 is the embodiment in which both the belt structure 6 (inclusive of the two crossed layers and the zero-degree layer) and the tread band 7 are manufactured in a conventional plant, i.e. in the belt-manufacturing line 12b and in a conventional tread band-production line (not shown in Fig. 1) and subsequently associated (see Fig. 4) with the built carcass structure 3 by use of the transfer member 46.
   Alternatively, as shown in Figs. 3a and 4a, the belt structure 6 alone (inclusive of the two crossed layers and the zero-degree layer) is made in a plant of the conventional type (i.e. in the belt-manufacturing line 12b), while the tread band 7 is subsequently obtained directly on the building support 9 provided with the inflatable bladder 14 in the work station 112 in Fig. 1.
   According to a further embodiment (not shown) only the two crossed layers of the belt structure 6 are made in the belt-manufacturing line 12b, while the zero-degree layer of the belt structure (as well as the tread band) is obtained on the building support 9 provided with the inflatable bladder 14.
   Radial expansion of the inflatable bladder 14 can be achieved following a controlled axial movement of the anchoring flanges 15, 16 and therefore of the circumferential edges of the inflatable bladder 14, away from or close to each other.
   This movement can be carried out by axial-movement devices for example, that are carried by the robotized arm 10 engaging the building support 9 and operate in such a manner as to rotate shafts 17, 18 firmly and jointly within the anchoring flanges 15, 16 themselves. The opposite threads engaging each of the shafts 17, 18 within the respective flanges cause, following the above-mentioned rotation, the desired mutual axial movement of the flanges themselves and, as a result, the radial expansion of the inflatable bladder 14 by effect of the inflating pressure of the latter. The axial movement of flanges 15, 16 can also be obtained through mutual axial sliding of the shafts 17. 18.
   Alternatively, or in addition to the axial movement of the anchoring flanges 15, 16, the radial expansion of the inflatable bladder 14 can be carried out by further admission thereinto of fluid under pressure, through the inflating devices 42.
   The structure of the anchoring flanges 15, 16 gives the inner circumferential edges 14a of the inflatable bladder 14 some mobility in a radial direction. Consequently, the circumferential edges 14a of the inflatable bladder 14 are free to move in a radial and a circumferential direction, dragging along the blocks 27 carrying out a radial translation away from axis X-X and compressing the elastic return members 35.
   This mobility of the circumferential edges 14a of the inflatable bladder 14 can be advantageously utilised to help the radial expansion of said bladder. However, in a preferential solution, the inflating pressure of bladder 14 under radial-expansion conditions preferably keeps lower than about 5 bars or at all events within a value enabling the elastic return members 35 to maintain blocks 27 in a radially contracted position.
   The radial expansion of the inflatable bladder 14 can be advantageously utilised to determine a pressing action of the belt structure 6 against the built carcass structure 3, then applied against the belt structure itself. The transfer member 46 can be subsequently disengaged from the belt structure 6 applied around the carcass structure 3. The pressing action for application purposes can be implemented by a rolling or brushing step, to be executed in a manner known by itself on the belt structure 6 after disengagement of the transfer member 46.
   As above mentioned, applied to the belt structure 6, before or after application of said belt structure to the carcass structure 3, is the tread band 7 that can be made in the form of a semifinished product directly extruded based on the final geometrical and dimensional configuration of the tread band itself. Generally provided in this embodiment is a further step of rolling the tread band so that the latter is correctly associated with the underlying belt structure. Alternatively, the tread band 7 is formed by winding on the belt structure 6, a continuous elongated element of reduced sizes to form coils disposed close to each other and superposed until the desired geometrical and dimensional configuration is given to the tread band 7.
   According to the previously mentioned design scheme providing "overlying sidewalls", generally a first portion of the sidewalls 8 is applied at the beads 5 of tyre 2 during manufacture of the carcass structure 3. A second portion of the sidewalls 8 is subsequently applied in a step following arrangement of the tread band 7 so that the radially external end edges of said second portion are superimposed on the side edges of the tread band. Preferably, the elastomer material of said second portion has a lower hardness than the elastomer material of said first portion.
   Advantageously, during assembling of the different components of tyre 2, and in particular during manufacture of the built carcass structure 3, a control of the inner pressure of the inflatable bladder 14 may be provided to be carried out continuously or at predetermined intervals. In fact the Applicant has found that this inner pressure can be submitted to important variations, due to temperature increases or falls taking place during working, with consequent repercussions on the geometrical conformation of the inflatable bladder 14 in an inflated state. For the purpose, devices 47 for control and maintenance of the inflating pressure in the inflatable bladder 14 are provided which preferably comprise a pneumatic tank 47a (diagrammatically shown) associated with the first shaft 17 for example and connected with the fluid-admitting duct 43, so that it can be filled with the fluid under pressure concurrently with inflation of bladder 14. Combined with the pneumatic tank 46a are control members consisting of a manometric sensor 47b for example, that is connected to an on-off valve 47b set on the tank itself to control admission of fluid under pressure into the inflatable bladder 14 should the inner pressure of said bladder fall under a predetermined value. The manometric sensor 47b can also command opening of a discharge valve 48 associated with an outflow duct 49 discharging the fluid under pressure from the inflatable bladder 14, to determine evacuation of the fluid under pressure should the inner pressure of bladder 14 go up beyond a predetermined threshold during manufacturing of tyre 2.
   When manufacture has been completed, the building support 9 with the green tyre 2 formed thereon is transferred into one of the vulcanisation moulds 13 provided in the vulcanisation and moulding station 113 of Fig. 1, wherein activation of over-inflating devices 50 is operated, upon the action of which devices a further expansion of the inflatable bladder is determined starting from the radial-expansion condition.
   These over-inflating devices 50 can be coincident with, or form an integral part of the above described inflating devices 42 and can comprise an admission channel 51 and an evacuation channel 52 for a fluid under pressure for example, which channels are longitudinally arranged in the second shaft 18 and can be connected with a circuit for feeding steam or other vulcanisation fluid usually associated with the mould 13. Through the admission 51 and evacuation 52 channels, circulation of steam within the building support 9 is therefore enabled at pressure values even higher than 20 bars, considerably higher than those generated to bring and maintain the bladder 14 to the inflated condition in the preceding tyre 2 manufacturing steps.
   The high pressure of the steam admitted into the inflatable bladder 14 therefore gives rise to over-inflation with further expansion so as to ensure compression of tyre 2 against the inner walls of mould 13.
   Under this circumstance, the inner pressure of the inflatable bladder 14 is capable of overcoming the action exerted by the elastic return members 35.
   Consequently, the circumferential edges 14a of the inflatable bladder 14 move in a radial and circumferential direction, dragging along blocks 27 that carry out a radial translation away from axis X-X and compress the elastic return members 35, to help expansion of the bladder during the over-inflation step. Preferably, for reaching the over-inflation condition the inner circumferential edges are submitted to an expansion of at least 2% in a circumferential direction.
   When vulcanisation has been completed, the steam under pressure is ejected from the inflatable bladder 14 through the evacuation channel 52 and, due to pressure reduction, the elastic return members 35 bring blocks 27 back to the first operating condition, causing separation of the inflatable bladder 14 from the inner surfaces of tyre 2.
   In the work station 114, the building support 9 with the finished tyre 2 are extracted from mould 13 to be subsequently separated from each other. For the purpose, the first and second shafts 17, 18 are mutually disengaged and, while tyre 2 is externally retained by a handler 53, a mutual approaching of the anchoring flanges 15, 16 can be carried out to cause separation of beads 5 from the circumferential abutment flanges 37. Afterwards, axial movement of the second hubs 41 away from the first hubs 40 is caused, so that the second circumferential sectors 39 are free to take an orientation towards the rest condition without mechanically interfering with the first circumferential sectors 38. During this axial-movement step the second circumferential sectors 39 carried by at least one of the second hubs 41, the one associated with the first shaft 17 for example, are forced to pass at the inside of the corresponding bead 5 of tyre 2, concurrently with their reaching a rest condition.
   Subsequently, axial moving of the anchoring flanges 15, 16 away from each other is driven, so that passage of the first circumferential sectors 38 of at least one of the first hubs 40, the one associated with the first shaft 17 for example, at the inside of the bead of tyre 2 is caused. Tyre 2, through handler 53, lends itself to be axially slipped off through one of the anchoring flanges 15, 16, the flange 15 associated with the first shaft 17 for example, as well as from the respective hubs 40, 41. A holding ring 54 can be advantageously fitted on the axially spaced apart hubs 40, 41 associated with the first shaft 17, to maintain the circumferential sectors 38, 39 in the rest position.
   It is to be noted that removal of tyre 2 from the building support 9 can be possibly carried out before vulcanisation so that the last-mentioned operation can be performed in a conventional vulcanising unit to be also used for vulcanisation of the tyre manufactured along the assembling line 12a.
   The original utilisation of the inflatable bladder 14 in accordance with the invention enables manufacture of tyres through formation of the constituent elements of the carcass structure 3 by laying of elementary components on the building support 9 and accomplishment of the belt structure 6 - and possibly the tread band 7
- in production lines of the traditional type, i.e. operating on semifinished products.

Integrating a carcass-building line 12 for manufacture of the carcass structures by means of elementary components, with a conventional assembling line 12a, also enables the production flexibility of the plant to be greatly increased, due to the possibility of obtaining, on the building line 12, carcass structures having construction standards different from each other and/or from those of the carcass structures produced along the assembling line 12a.

The process in accordance with the present invention in addition achieves the advantage that the final diameter when the belt structure is laid on the underlying carcass structure is without doubt the desired one and the one calculated during the planning step. In fact, in accordance with the invention, the belt structure is advantageously obtained by laying said structure on a cylindrical drum (the collapsible drum 45), instead of laying it on a building support comprising an inflatable bladder. In addition, the final diameter of the belt structure is ensured by the predetermined height of the transfer member 46; in fact, expansion of the inflatable bladder 14 supporting the carcass structure is regulated in such a manner that coupling between the belt structure retained by the transfer member 46 and the carcass structure associated with said inflatable bladder 14 is allowed. An advantage therefore exists in terms of quality of the produced tyre, particularly as regards evenness of same.

A further advantage resulting from the process in accordance with the present invention resides in that use of manufacturing lines of a conventional type to make the belt structures allows arrangement, if required, of encircling elongated elements of elastomer material disposed at the circumferential edges of the crossed belt layers to surround said edges. These elongated elements are sometimes used to protect the integrity of the tyre at the axial ends of said belt layers so as to prevent the end portions of the metallic cords present in said belt layers from irreparably damaging the tyre structure at the tyre sidewalls.

As above pointed out, a further advantage achieved with the process of the invention is the possibility of applying to the carcass structure, a belt structure and possibly a tread band previously formed, avoiding the inflatable bladder and the manufactured article supported thereby being submitted to undesirable stresses that, on the contrary, would take place should the belt structure be manufactured through laying of the elementary components directly on the carcass structure supported on the inflatable bladder of the building support. Therefore, the process in accordance with the invention makes it possible and convenient to use an inflatable bladder having a simplified structure.

In addition, since the building support comprising the inflatable bladder enables the green tyre to be disengaged from the support itself in a sufficiently easy manner, in the process in accordance with the invention the vulcanisation step can be conducted in a conventional manner, i.e. without introducing said support into the vulcanisation mould.

Other advantages are also achieved in terms of improvement of the moulding conditions of tyre 2 and, consequently, of the quality of the finished product. In fact, due to the mobility of the inner circumferential edges 14a of bladder 14 in a radial direction, an optimal expansion of the bladder itself in the over-inflated condition is ensured and, as a result, a better evenness when tyre 2 is pressed against the walls of mould 13.

Achievement of the above advantages is also helped by the construction features of the inflatable bladder 14 and in particular by the expandability of the circumferential edges 14a of said bladder in a circumferential direction.

The mobility of the circumferential edges-14a greatly reduces the stresses to which the inflatable bladder 14 as a whole is submitted during the radial expansion and/or over-inflation steps. Thus a longer duration of the inflatable bladder 14 is ensured and the frequency of interventions for maintenance on the building support 9 is reduced.

It will be also recognised that the inflation control through control of the geometrical configuration of bladder 14 offers a better control of the geometrical uniformity of the obtained product. The fact that the inner pressure of the bladder, when inflation has been completed, is controlled and maintained during execution of the whole process for manufacturing tyre 2 also helps in reaching the above improvement.

The possibility of axially positioning the anchoring flanges 15, 16 along the respective first and second shafts 17, 18 also allows the building support 9 to be adapted to production of tyres of different sizes.

## Claims

1. A plant (1) for manufacturing tyres (2), comprising:
- a carcass-assembling line (12a) comprising devices for forming assembled carcass structures (3) through laying of semifinished components on a carcass-assembling support (9a);
- a carcass-building line (12) comprising devices for forming built carcass structures (3) through laying of elementary components on a carcass-building support (9);
- a belt manufacturing line (12b);
- devices (46) for belt application, designed to apply an annular belt structure (6) manufactured in said belt manufacturing line (12b), at a radially external position, to each of said assembled carcass structures and built carcass structures (3);
- a work station (112) in which tread bands (7) are supplied at a radially external position to said annular belt structures (6); and
- a vulcanisation and moulding station (113) for the thus obtained tyres.

2. A plant as claimed in claim 1, wherein:
- the carcass-building support (9) comprises an inflatable bladder (14) having coaxially spaced apart circumferential edges;
- said carcass-building line (12) comprising inflating devices (42) to bring the inflatable bladder (14) to an inflated condition so that it has a substantially toroidal shape with an outer surface thereof conforming in shape to an inner surface of said built carcass structures (3).

3. A plant as claimed in claim 2, wherein said devices (46) for application of the belt structures (6) comprise:
- positioning devices (46) operating on the belt structure (6) to support it at a coaxially centred position around the built carcass structure (3), formed on the building support (9); and
- devices for expanding the inflatable bladder (14) from the inflated condition, at which the built carcass structure (3) formed thereon has a maximum diameter smaller than an inner diameter of the belt structure (6), to a radial-expansion condition at which the built carcass structure (3) is applied against the belt structure (6).

4. A plant as claimed in claim 3, wherein said carcass-building support, (9) comprises axially opposite anchoring flanges (15, 16) engaging the circumferential edges (14a) of the inflatable bladder (14).

5. A plant as claimed in claim 4, wherein the devices for expanding the inflatable bladder (14) comprise members for axial movement of the anchoring flanges (15, 16).

6. A plant as claimed in claim 5, wherein said members for axial movement comprise a first shaft (17) and a second shaft (18) to be telescopically engaged into each other and carrying the anchoring flanges (15, 16), respectively.

7. A plant as claimed in claim 6, wherein the anchoring flanges (15, 16) are engaged on the first and second shafts (17, 18) by means of first and second threads (15a, 16a) respectively, having opposite screwing directions, said axial-movement members comprising devices for driving the shafts (17, 18) in rotation relative to the anchoring flanges (15, 16).

8. A plant as claimed in claim 6, wherein the inflating devices (42) comprise at least one pneumatic admission duct (43) formed in at least one of said first shaft (17) and second shaft (18).

9. A plant as claimed in claim 3, wherein the devices for expanding the inflatable bladder (14) comprise command members operating on the inflating devices (42) to enable admission of fluid under pressure into the inflatable bladder (14) in an inflated condition.

10. A plant as claimed in claim 4, wherein radial-sliding members (26) associated with said anchoring flanges (15, 16) allow radial movement of the circumferential edges (14a) of the inflatable bladder (14) .

11. A plant as claimed in claim 10, wherein the radial-sliding members (26) comprise, for each anchoring flange (15, 16), a plurality of circumferentially-distributed blocks that are slidably guided in a substantially radial direction on the anchoring flange (15, 16) and rigidly engage the corresponding circumferential edge (14a) of the inflatable bladder.

12. A plant as claimed in claim 11, comprising elastic return members (35) operating on the blocks (27) to push them against a geometrical axis of the inflatable bladder (14).

13. A plant as claimed in claim 11, wherein each circumferential edge (14a) of the inflatable bladder (14) is enclosed between said blocks and a radial abutment surface (37) defined in the anchoring flange (15, 16).

14. A plant as claimed in claim 13, wherein the inflatable bladder (14) is slidably and sealingly engaged against the radial abutment surface (37).

15. A plant as claimed in claims 4 and 10, wherein at least one circumferential seal (34) acting against the inflatable bladder (14) is associated with each anchoring flange (15, 16) at a radially external position relative to the radial-sliding members (26).

16. A plant as claimed in claim 11, wherein associated with each anchoring flange (15, 16) is at least one annular membrane (36) having a radially internal circumferential edge sealingly fastened to the anchoring flange (15, 16) at a radially internal position relative to the radial-sliding members (26), and a radially external circumferential edge sealingly fastened to the anchoring flange (15, 16) at a radially external position relative to the radial-sliding members (26).

17. A plant as claimed in claim 2, further comprising devices (47) for control and maintenance of the inflating pressure of the inflatable bladder (14) during assembling of the components of the built carcass structure (3) on the carcass-building support (9).

18. A plant as claimed in claim 17, wherein said devices (47) for control and maintenance of the inflating pressure comprise a pneumatic tank (47a) associated with the carcass-building support (9), and control members (47b, 47c) interconnected with said tank to keep a constant control of the inflating pressure of the inflatable bladder (14) in the inflated condition.

19. A plant as claimed in claim 2, further comprising two annular flanges (37) to be positioned at respectively opposite positions against the outer side surfaces of the inflatable bladder (14) and each defining a rigid abutment surface for formation of a bead (5) of the tyre (2) under working.

20. A plant as claimed in claim 19, wherein each annular flange (37) comprises circumferential sectors (38, 39) that are movable between an operating position at which they have an orientation substantially radial to a geometric axis of the inflatable bladder (14), and a rest position at which they are radially retracted to enable disengagement of the tyre (2) from the carcass-building support (9).

21. A plant as claimed in claim 20, wherein each annular flange (37) comprises first sectors (38) and second sectors (39) that are circumferentially distributed in an alternated sequence and are in engagement with a first hub (40) and a second hub (41) respectively, that are axially movable with respect to each other.

22. A plant as claimed in claim 2, wherein associated with said inflating devices (42) are members for detecting the geometrical configuration of the inflatable chamber (14), in order to interrupt admission of fluid under pressure when the inflatable bladder (14) has reached predetermined sizes.

23. A plant as claimed in claim 22, wherein said detecting members comprise at least one photoemitter generating a light beam to be intercepted by the inflatable bladder (14) in an inflated condition, and a photoreceiver set to receive the light beam.

24. A plant as claimed in claim 1, wherein the devices for forming the built carcass structures (3) comprise members for laying strip-like elements of rubberised cords on the carcass-building support (9) in a circumferential sequence, so as to form at least one carcass ply.

25. A plant as claimed in claim 1, wherein the devices for forming the built carcass structures (3) comprise members for applying at least one continuous elongated element resistant to tensile strength, in the form of coils radially superimposed around a geometric rotation axis of the carcass-building support (9), to form an annular anchoring structure (5a) in the vicinity of an inner circumferential edge of the built carcass structure (3).

26. A plant as claimed in claim 2, wherein said vulcanisation and moulding station (113) comprises:
- a tyre vulcanisation mould (13);
- devices for transferring the carcass-building support (9) into the vulcanisation mould (13).
- devices (50) for over-inflation of the inflatable bladder (14) operating in said vulcanisation mould (13) and adapted to be started in order to impose an additional radial expansion to the inflatable bladder (14), starting from the radial-expansion condition.

27. A plant as claimed in claim 1, further comprising devices for applying elongated reinforcing inserts extending into circumferential coils disposed axially close to each other around the annular belt structures (6) carried by the assembled carcass structures and built carcass structures (3).

28. A plant as claimed in claim 1, wherein said work station (112) comprises devices for forming the tread band (7) by winding a semifinished product in elastomer material around the belt structure (6), which product has substantially the same width as the tread band.

29. A method of manufacturing tyres (2) comprising the steps of:
- applying semifinished components onto a carcass-assembling support (9a) so as to form assembled carcass structures (3);
- applying a plurality of elongated elementary components onto a carcass-building support (9) so as to form built carcass structures (3);
- making annular belt structures (6) in a belt-manufacturing line (12b);
- applying at least one of said belt structures (6) at a radially external position to each of said assembled carcass structures and built carcass structures (3);
- associating a tread band at a radially external position to each annular belt structure; and
- vulcanising and moulding the thus obtained tyres.

30. A method as claimed in claim 29, wherein said elementary components are laid on an inflatable bladder (14) associated with the carcass-building support (9) and set in an inflated condition so as to have an outer surface thereof conforming in shape to an inner surface of said built carcass structures (3).

31. A method as claimed in claim 30, wherein application of the belt structures (6) to the built carcass structures (3) comprises the steps of:
- arranging the belt structure (6) at a coaxially centred position relative to the built carcass structure (3) formed on the inflatable bladder (14);
- radially expanding the inflatable bladder (14) to apply the built carcass structure (3) against the belt structure (6).

32. A method as claimed in claim 31, wherein radial expansion of the inflatable bladder (14) is carried out through mutual axial movement of the axially spaced apart circumferential edges (14a) of the inflatable bladder itself.

33. A method as claimed in claim 31 or 32, wherein radial expansion of the inflatable bladder (14) is carried out through admission thereinto of a fluid under pressure.

34. A method as claimed in claim 31 or 32, wherein during the radial expansion the circumferential edges (14a) of the inflatable bladder (14) are submitted to a centrifugal radial movement.

35. A method as claimed in claim 34, wherein in the translation between the inflated condition and the radial-expansion condition each circumferential edge (14a) of the inflatable bladder (14) is slidably and sealingly guided in an anchoring flange (15, 16) associated with said carcass-building support (9).

36. A method as claimed in claim 29, further comprising a step of pressing the belt structure (6) against the built carcass structure (3).

37. A method as claimed in claim 31 and 36, wherein said pressing step is carried out concurrently with said radial-expansion step.

38. A method as claimed in claim 36 or 37, wherein said pressing step is carried out by exerting a rolling or brushing action on the belt structure (6).

39. A method as claimed in claim 30, wherein arrangement of the bladder (14) in the inflated condition is carried out by admission of a fluid under pressure into the inflatable bladder (14), said method further comprising the step of controlling the geometrical configuration of the inflatable bladder (14).

40. A method as claimed in claim 39, wherein control of the geometrical configuration of the inflatable bladder (14) is carried out by detecting the interception of at least one light beam by the inflatable bladder (14) when the latter reaches the inflated condition.

41. A method as claimed in claim 30, wherein during the step of assembling the elementary components of the built carcass structure (3) on the carcass-building support (9) at least control of the inflating pressure of the inflatable bladder (14) is carried out.

42. A method as claimed in claim 29, wherein the step of associating the tread band (7) is carried out through:
- forming of an elastomer semifinished product having the same width as the tread band (7); and
- winding of said semifinished product around the belt structure (6).

43. A method as claimed in claim 29, wherein the step of associating the tread band (7) is carried out before application of the belt structure (6) onto the assembled carcass structure or the built carcass structure (3).

44. A method as claimed in claim 29, wherein the step of associating the tread band (7) is carried out after application of the belt structure (6) onto the assembled carcass structure or the built carcass structure (3).

45. A method as claimed in claim 30, wherein the vulcanisation and moulding step of each tyre manufactured on the carcass-building support (9) comprises the steps of:
- removing the green tyre (2) from the carcass-building support (9);
- introducing the green tyre (2) into a vulcanisation mould (13).

46. A method as claimed in claim 30, wherein the vulcanisation and moulding step of each tyre manufactured on the carcass-building support (9) comprises the steps of:
- introducing the green tyre (2) and the carcass-building support (9) into a vulcanisation mould (13);
- carrying out an over-inflation of the inflatable bladder (14) during the vulcanisation and moulding step.

47. A method as claimed in claim 46, wherein during the over-inflation step, the circumferential edges (14a) of the inflatable bladder (14) are submitted to a radial outward movement.

48. A method as claimed in claim 45 or 46, further comprising a step of deflating the inflatable bladder (14) to enable disengagement of the carcass-building support (9) from the tyre (2).

49. A method as claimed in claim 30, further comprising the step of laterally moving a pair of annular abutment flanges (37) close to the inflatable bladder (14), said flanges (37) defining rest seats for respective beads of the tyre (2) under working.

50. A method as claimed in claim 29, wherein formation of the built carcass structure (3) comprises at least one step of forming a carcass ply (4) by laying strip-like elements made of rubberised cords, in a circumferential succession, on the carcass-building support (9).

51. A method as claimed in claim 29, wherein formation of the built carcass structure (3) comprises at least one step of forming an annular anchoring structure (5a) close to an inner circumferential edge of the built carcass structure (3), through winding of a continuous elongated element into radially superposed coils.

## Patentansprüche

1. Anlage (1) zum Herstellen von Reifen (2), die umfasst:
- eine Karkassenmontagelinie (12a), die Einrichtungen zum Ausbilden zusammengefügter Karkassenstrukturen (3) durch Verlegen von halbfertigen Komponenten auf einem Karkassenmontageträger (9a) umfasst;
- eine Karkassenaufbaulinie (12), die Einrichtungen zum Ausbilden aufgebauter Karkassenstrukturen (3) durch Verlegen von Elementarkomponenten auf einem Karkassenaufbauträger (9) umfasst;
- eine Gürtelherstellungslinie (12b),
- Einrichtungen (46) für eine Gürtelanbringung, die gestaltet ist, eine ringförmige Gürtelstruktur (6), die in der Gürtelherstellungslinie (12b) gefertigt wird, an einer radialen Außenposition an jeder der zusammengefügten Karkassenstrukturen und aufgebauten Karkassenstrukturen (3) anzubringen;
- einen Arbeitsplatz (112), in dem Laufflächenbänder (7) an einer radialen Außenposition den ringförmigen Gürtelstrukturen (6) zugeführt werden; und
- eine Vulkanisierungs- und Ausformungsstation (113) für die somit erhaltenen Reifen.

2. Anlage nach Anspruch 1, bei der:
- der Karkassenaufbauträger (9) eine aufblasbare Blase (14) umfasst, die koaxial beabstandete Umfangskanten aufweist;
- die Karkassenaufbaulinie (12) Aufblaseinrichtungen (42) umfasst, um die aufblasbare Blase (14) in einen aufgeblasenen Zustand zu bringen, sodass diese eine im Wesentlichen toroidförmige Gestalt aufweist, wobei eine Außenoberfläche davon bezüglich der Gestalt einer Innenoberfläche der aufgebauten Karkassenstrukturen (3) entspricht.

3. Anlage nach Anspruch 2, bei der die Einrichtungen (46) zum Anbringen der Gürtelstrukturen (6) umfassen:
- Positionierungseinrichtungen (46), die auf der Gürtelstruktur agieren, um diese an einer koaxial mittleren Position um die aufgebaute Karkassenstruktur (3) zu unterstützen, die auf dem Aufbauträger (9) ausgebildet sind; und
- Einrichtungen zum Erweitern der aufblasbaren Blase (14) von dem aufgeblasenen Zustand, in dem die darauf ausgebildete aufgebaute Karkassenstruktur (3) einen maximalen Durchmesser aufweist, der kleiner als ein Innendurchmesser der Gürtelstruktur (6) ist, in einen radialen Erweitungszustand, bei dem die aufgebaute Karkassenstruktur (3) gegen die Gürtelstruktur (6) angelegt wird.

4. Anlage nach Anspruch 3, bei welcher der Karkassenaufbauträger (9) axial gegenüberliegende Befestigungsflansche (15, 16) umfasst, die mit den Umfangskanten (14a) der aufblasbaren Blase (14) eingreifen.

5. Anlage nach Anspruch 4, bei der die Einrichtungen zum Erweitern der aufblasbaren Blase (14) Elemente für eine axiale Bewegung der Befestigungsflansche (15, 16) umfasst.

6. Anlage nach Anspruch 5, bei der die Elemente für eine axiale Bewegung eine erste Welle (17) und eine zweite Welle (18) umfassen, die teleskopförmig ineinander eingreifen und entsprechend die Befestigungsflansche (15, 16) tragen.

7. Anlage nach Anspruch 6, bei der die Befestigungsflansche (15, 16) auf der ersten und zweiten Welle (17, 18) mittels erster und zweiter Gewinde (15a, 16a), die entgegengesetzte Schraubrichtungen aufweisen, entsprechend eingreifen, wobei die axialen Bewegungselemente Einrichtungen zum drehbaren Antreiben der Wellen (17, 18) relativ zu den Befestigungsflanschen (15, 16) umfassen.

8. Anlage nach Anspruch 6, bei der die Aufblaseinrichtungen (42) wenigstens eine Durchlassdüse (43) umfassen, die in wenigstens entweder der ersten Welle (17) oder der zweiten Welle (18) ausgebildet ist.

9. Anlage nach Anspruch 3, bei der die Einrichtungen zum Erweitern der aufblasbaren Blase (14) Befehlselemente umfassen, die auf den Aufblaseinrichtungen (42) agieren, um einen Durchlass eines Fluids unter Druck in die aufblasbare Blase (14) in einem aufgeblasenen Zustand zu ermöglichen.

10. Anlage nach Anspruch 4, bei der Radialgleitelemente (26), die mit den Verankerungsflanschen (15, 16) assoziiert sind, eine radiale Bewegung der Umfangskanten (14a) der aufblasbaren Blase (14) erlauben.

11. Anlage nach Anspruch 10, bei der die Radialgleitelemente (26) für jeden Verankerungsflansch (15, 16) eine Mehrzahl von in Umfangsrichtung verteilten Blöcken umfassen, die in einer im Wesentlichen radialen Richtung an dem Verankerungsflansch (15, 16) verschiebbar geführt werden und mit der entsprechenden Umfangskante (14a) der aufblasbaren Blase fest eingreifen.

12. Anlage nach Anspruch 11, die elastische Rückführungselemente (35) umfasst, die auf den Blöcken (27) agieren, um diese gegen eine geometrische Achse der aufblasbaren Blase (14) zu drücken.

13. Anlage nach Anspruch 11, bei der jede Umfangskante (14a) der aufblasbaren Blase (14) zwischen den Blöcken und einer radialen Angrenzungsoberfläche (37) eingeschlossen ist, die in dem Verankerungsflansch (15, 16) definiert ist.

14. Anlage nach Anspruch 13, bei der die aufblasbare Blase (14) gegen die radiale Angrenzungsoberfläche (37) verschiebbar und dichtend eingreift.

15. Anlage nach Anspruch 4 und 10, bei der wenigstens eine Umfangsdichtung (34), die gegen die aufblasbare Blase (14) wirkt, mit jedem Verankerungsflansch (15, 16) an einer radialen Außenposition relativ zu den Radialgleitelementen (26) assoziiert ist.

16. Anlage nach Anspruch 11, bei der wenigstens eine ringförmige Membran (36), die eine radial innere Umfangskante, die an dem Verankerungsflansch (15, 16) an einer radial inneren Position relativ zu den Radialgleitelementen (26) dichtend befestigt ist, und eine radial äußere Umfangskante, die an dem Verankerungsflansch (15, 16) an einer radial äußeren Position relativ zu den Radialgleitelementen (26) dichtend befestigt ist, aufweist, mit jedem Verankerungsflansch (15, 16) assoziiert ist.

17. Anlage nach Anspruch 2, ferner umfassend Einrichtungen (47) zur Steuerung und Beibehaltung des Aufblasdrucks der aufblasbaren Blase (14) während des Zusammenfügens der Komponenten der aufgebauten Karkassenstruktur (3) auf dem Karkassenaufbauträger (9).

18. Anlage nach Anspruch 17, bei der die Einrichtungen (47) zur Steuerung und Beibehaltung des Aufblasdrucks einen pneumatischen Tank (47a), der mit dem Karkassenaufbauträger (9) assoziiert ist, und Steuerelemente (47b, 47c) umfasst, die mit dem Tank verbunden sind, um eine konstante Steuerung des Aufblasdrucks der aufblasbaren Blase (14) in dem aufgeblasenen Zustand beizubehalten.

19. Anlage nach Anspruch 2, ferner umfassend zwei ringförmige Flansche (37), die an entsprechenden gegenüberliegenden Positionen gegen die äußeren Seitenoberflächen der aufblasbaren Blase (14) zu positionieren sind, und wobei jeder eine feste Angrenzungsoberfläche zum Ausbilden einer Wulst (5) des Reifens (2) im Betrieb definiert.

20. Anlage nach Anspruch 19, bei der jeder ringförmige Flansch (37) Umfangssektoren (38, 39) umfasst, die zwischen einer Betriebsposition, bei der diese eine Ausrichtung aufweisen, die im Wesentlichen radial zu einer geometrischen Achse der aufblasbaren Blase (14) ist, und einer Ruheposition bewegbar sind, bei der diese radial zurückgezogen sind, um ein Lösen des Reifens (2) von dem Karkassenaufbauträger (9) zu ermöglichen.

21. Anlage nach Anspruch 20, bei der jeder ringförmige Flansch (37) erste Sektoren (38) und zweite Sektoren (39) umfasst, die in einer abwechselnden Sequenz in Umfangsrichtung verteilt sind und sich entsprechend mit einer ersten Nabe (40) und einer zweiten Nabe (41) im Eingriff befinden, die relativ zueinander axial bewegbar sind.

22. Anlage nach Anspruch 2, bei der Elemente zum Detektieren des geometrischen Aufbaus der aufblasbaren Kammer (14) mit den Aufblaseinrichtungen (42) assoziiert sind, um den Durchlass des Fluids unter Druck zu unterbrechen, wenn die aufblasbare Blase (14) vorbestimmte Abmessungen erreicht hat.

23. Anlage nach Anspruch 22, bei der die Detektionselemente wenigstens einen Fotoemitter, der einen Lichtstrahl erzeugt, um von der aufblasbaren Blase (14) in einem aufgeblasenen Zustand unterbrochen zu werden, und einen Fotoreceiver umfassen, um den Lichtstrahl zu empfangen.

24. Anlage nach Anspruch 1, bei der die Einrichtungen zum Ausbilden der aufgebauten Karkassenstrukturen (3) Elemente zum Verlegen von streifenförmigen Elementen aus gummierten Schnüren auf dem Karkassenaufbauträger (9) in einer Umfangssequenz umfassen, um wenigstens eine Karkassenlage auszubilden.

25. Anlage nach Anspruch 1, bei der die Einrichtungen zum Ausbilden der aufgebauten Karkassenstrukturen (3) Elemente zum Anbringen wenigstens eines kontinuierlichen länglichen Elements, das bezüglich einer Zugfestigkeit widerstandsfähig ist, in der Form von Wicklungen umfassen, die um eine geometrische Drehachse des Karkassenaufbauträgers (9) radial überlagert sind, um eine ringförmige Verankerungsstruktur (5a) in der Umgebung einer Innenumfangskante der aufgebauten Karkassenstruktur (3) auszubilden.

26. Anlage nach Anspruch 2, bei der die Vulkanisierung und Ausformungsstation (113) umfasst:
- eine Reifenvulkanisierungsform (13);
- Einrichtungen zum Übertragen des Karkassenaufbauträgers (9) in die Vulkanisierungsform (13);
- Einrichtungen (50) zum Überaufblasen der aufblasbaren Blase (14), die in der Vulkanisierungsform (13) agiert und angepasst ist, gestartet zu werden, um der aufblasbaren Blase (14) eine zusätzliche radiale Erweiterung aufzuzwingen, ausgehend von dem radialen Erweiterungszustand.

27. Anlage nach Anspruch 1, ferner umfassend Einrichtungen zum Anbringen von länglichen Verstärkungseinlagen, die sich in Umfangswicklungen erstrecken, die axial nahe beieinander um die ringförmigen Gürtelstrukturen (6) angeordnet sind, die von den zusammengefügten Karkassenstrukturen und aufgebauten Karkassenstrukturen (3) getragen werden.

28. Anlage nach Anspruch 1, bei der die Arbeitsstation (112) Einrichtungen zum Ausbilden des Laufflächenbands (7) durch Wickeln eines halbfertigen Produkts in Elastomermaterial um die Gürtelstruktur (6) umfasst, wobei das Produkt im Wesentlichen dieselbe Breite wie das Laufflächenband aufweist.

29. Verfahren zur Herstellung von Reifen (2), umfassend die Schritte:
- Anbringen halbfertiger Komponenten auf einen Karkassenmontageträger (9a), um zusammengefügte Karkassenstrukturen (3) auszubilden;
- Anbringen einer Mehrzahl von länglichen Elementarkomponenten auf einen Karkassenaufbauträger (9), um aufgebaute Karkassenstrukturen (3) auszubilden;
- Fertigen von ringförmigen Gürtelstrukturen (6) in einer Gürtelherstellungslinie (12b);
- Anbringen wenigstens einer der Gürtelstrukturen (6) an jede der zusammengefügten Karkassenstrukturen und aufgebauten Karkassenstrukturen (3) an einer radialen Außenposition;
- Assoziieren eines Laufflächenbands an einer radialen Außenposition mit jeder ringförmigen Gürtelstruktur; und
- Vulkanisieren und Formen der somit erhaltenen Reifen.

30. Verfahren nach Anspruch 29, bei dem die Elementarkomponenten auf einer aufblasbaren Blase (14) verlegt werden, die mit dem Karkassenaufbauträger (9) assoziiert ist und in einem aufgeblasenen Zustand festgelegt ist, um eine Außenoberfläche davon aufzuweisen, die bezüglich der Gestalt einer Innenoberfläche der aufgebauten Karkassenstrukturen (3) entspricht.

31. Verfahren nach Anspruch 30, bei dem das Anbringen von Gürtelstrukturen (6) an die aufgebauten Karkassenstrukturen (3) die Schritte umfasst:
- Anordnen der Gürtelstruktur (6) an einer koaxial mittleren Position relativ zur aufgebauten Karkassenstruktur (3), die auf der aufblasbaren Blase (14) ausgebildet ist;
- radiales Erweitern der aufblasbaren Blase (14), um die aufgebaute Karkassenstruktur (3) gegen die Gürtelstruktur (6) anzulegen.

32. Verfahren nach Anspruch 31, bei dem eine radiale Erweiterung der aufblasbaren Blase (14) durch eine gegenseitig axiale Bewegung der axial beabstandeten Umfangskanten (14a) der aufblasbaren Blase selbst durchgeführt wird.

33. Verfahren nach Anspruch 31 oder 32, bei dem die radiale Erweiterung der aufblasbaren Blase (14) mittels dahinein Durchlassens eines Fluids unter Druck ausgeführt wird.

34. Verfahren nach Anspruch 31 oder 32, bei dem während der radialen Erweiterung die Umfangskanten (14a) der aufblasbaren Blase (14) einer radialen Zentrifugalbewegung unterzogen werden.

35. Verfahren nach Anspruch 34, bei dem in der Translation zwischen dem aufgeblasenen Zustand und dem radialen Erweiterungszustand jede Umfangskante (14a) der aufblasbaren Blase (14) verschiebbar und dichtend in einem Verankerungsflansch (15, 16), der mit dem Karkassenaufbauträger (9) assoziiert ist, geführt wird.

36. Verfahren nach Anspruch 29, ferner umfassend einen Schritt des Pressens der Gürtelstruktur (6) gegen die aufgebaute Karkassenstruktur (3).

37. Verfahren nach Anspruch 31 und 36, bei dem der Pressschritt gleichzeitig mit dem radialen Erweiterungsschritt ausgeführt wird.

38. Verfahren nach Anspruch 36 oder 37, bei dem der Pressschritt mittels Ausübens einer Roll- oder Bürstwirkung auf die Gürtelstruktur (6) ausgeführt wird.

39. Verfahren nach Anspruch 30, bei dem ein Anordnen der Blase (14) in den aufgeblasenen Zustand mittels Durchlassens eines Fluids unter Druck in die aufblasbare Blase (14) ausgeführt wird, wobei das Verfahren ferner den Schritt des Steuerns der geometrischen Konfiguration der aufblasbaren Blase (14) umfasst.

40. Verfahren nach Anspruch 39, bei dem die Steuerung der geometrischen Konfiguration der aufblasbaren Blase (14) durch Detektieren der Unterbrechung wenigstens eines Lichtstrahls durch die aufblasbare Blase (14) ausgeführt wird, wenn letztere den aufgeblasenen Zustand erreicht.

41. Verfahren nach Anspruch 30, bei dem während des Schritts des Zusammenfügens der Elementarkomponenten der aufgebauten Karkassenstruktur (3) auf dem Karkassenaufbauträger (9) wenigstens eine Steuerung des Aufblasdrucks der aufblasbaren Blase (14) ausgeführt wird.

42. Verfahren nach Anspruch 29, bei dem der Schritt des Assoziierens des Laufflächenbands (7) ausgeführt wird, durch:
- Ausbilden eines halbfertigen Elastomerprodukts, das dieselbe Breite wie das Laufflächenband (7) aufweist; und
- Wickeln des halbfertigen Produkts um die Gürtelstruktur (6).

43. Verfahren nach Anspruch 29, bei dem der Schritt des Assoziierens des Laufflächenbands (7) vor dem Anbringen der Gürtelstruktur (6) auf die zusammengefügte Karkassenstruktur oder die aufgebaute Karkassenstruktur (3) ausgeführt wird.

44. Verfahren nach Anspruch 29, bei dem der Schritt des Assoziierens des Laufflächenbands (7) nach dem Anbringen der Gürtelstruktur (6) auf die zusammengefügte Karkassenstruktur oder die aufgebaute Karkassenstruktur (3) ausgeführt wird.

45. Verfahren nach Anspruch 30, bei dem der Vulkanisierungs-und Ausformungsschritt jedes Reifens, der auf dem Karkassenaufbauträger (9) hergestellt wird, die Schritte umfasst:
- Entfernen des Reifenrohlings (2) von dem Karkassenaufbauträger (9);
- Einbringen des Reifenrohlings (2) in eine Vulkanisierungsform (13).

46. Verfahren nach Anspruch 30, bei dem der Vulkanisierungs-und Ausformungsschritt jedes Reifens, der auf dem Karkassenaufbauträger (9) hergestellt wird, die Schritte umfasst:
- Einbringen des Reifenrohlings (2) und des Karkassenaufbauträgers (9) in eine Vulkanisierungsform (13);
- Ausführen eines übermäßigen Aufblasens der aufblasbaren Blase (14) während des Vulkanisierungs- und Ausformungsschritts.

47. Verfahren nach Anspruch 46, bei dem während des Schritts des übermäßigen Aufblasens, die Umfangskanten (14a) der aufblasbaren Blase (14) einer radialen Außenbewegung unterzogen werden.

48. Verfahren nach Anspruch 45 oder 46, ferner umfassend einen Schritt des Entleerens der aufblasbaren Blase (14), um ein Lösen des Karkassenaufbauträgers (9) von dem Reifen (2) zu ermöglichen.

49. Verfahren nach Anspruch 30, ferner umfassend den Schritt des seitlichen Bewegens eines Paars von ringförmigen Angrenzungsflanschen (37) nahe bei der aufblasbaren Blase (14), wobei die Flansche (37) Ruhepositionen für entsprechende Wülste des Reifens (2) in Betrieb definieren.

50. Verfahren nach Anspruch 29, bei dem das Ausbilden der aufgebauten Karkassenstruktur (3) wenigstens einen Schritt des Ausbildens einer Karkassenlage (4) durch Verlegen von streifenförmigen Elementen, die aus gummierten Schnüren gefertigt sind, in einer Umfangsfolge auf dem Karkassenaufbauträger (9) umfasst.

51. Verfahren nach Anspruch 29, bei dem das Ausbilden der aufgebauten Karkassenstruktur (3) wenigstens einen Schritt des Ausbildens einer ringförmigen Verankerungsstruktur (5a) nahe einer inneren Umfangskante der aufgebauten Karkassenstruktur (3) durch Wickeln eines kontinuierlichen länglichen Elements in radial überlagerte Wicklungen umfasst.

## Revendications

1. Installation (1) pour fabriquer des pneumatiques (2), comprenant :
- une chaîne d'assemblage (12a) de carcasses comprenant des dispositifs pour former des structures de carcasses assemblées (3) en posant des éléments constitutifs semi-finis sur un support d'assemblage (9a) de carcasse ;
- une chaîne de construction (12) de carcasses comprenant des dispositifs pour former des structures de carcasses construites (3) en posant des éléments constitutifs élémentaires sur un support de construction (9) de carcasse ;
- une chaîne de fabrication (12b) de ceintures ;
- des dispositifs (46) d'application de ceinture, conçus pour appliquer une structure annulaire de ceinture (6), fabriquée sur ladite chaîne de fabrication (12b) de ceintures, en position radialement externe, sur chacune desdites structures de carcasses assemblées et structures de carcasses construites (3) ;
- un poste de travail (112) dans lequel des bandes de roulement (7) sont fournies, en position radialement externe, auxdites structures annulaires de ceintures (6) ; et
- un poste de vulcanisation et de moulage (113) pour les pneumatiques ainsi obtenus.

2. Installation selon la revendication 1, dans laquelle :
- le support de construction (9) de carcasse comporte une poche gonflable (14) ayant des bords périphériques espacés coaxialement l'un de l'autre ;
- ladite chaîne de construction (12) de carcasses comprenant des dispositifs de gonflage (42) pour mettre la poche gonflable (14) dans un état gonflé afin qu'elle ait une forme sensiblement toroïdale, une surface extérieure de celle-ci épousant par sa forme une surface intérieure desdites structures de carcasses construites (3).

3. Installation selon la revendication 2, dans laquelle lesdits dispositifs (46) pour l'application des structures de ceintures (6) comprennent :
- des dispositifs de mise en place (46) opérant sur la structure de ceinture (6) afin de la supporter dans une position centrée coaxialement autour de la structure de carcasse construite (3), formés sur le support de construction (9) ; et
- des dispositifs pour déployer la poche gonflable (14) en partant de l'état gonflé, dans lequel la structure de carcasse construite (3) formée sur celle-ci a un diamètre maximal plus petit qu'un diamètre intérieur de la structure de ceinture (6), pour parvenir à un état de déploiement radial dans lequel la structure de carcasse construite (3) est appliquée contre la structure de ceinture (5).

4. Installation selon la revendication 3, dans laquelle ledit support de construction (9) de carcasses comporte des brides d'ancrage axialement opposées (15, 16) au contact des bords périphériques (14a) de la poche gonflable (14).

5. Installation selon la revendication 4, dans laquelle les dispositifs pour déployer la poche gonflable (14) comprennent des organes pour le déplacement axial des brides d'ancrage (15, 16).

6. Installation selon la revendication 5, dans laquelle lesdits organes pour le déplacement axial comprennent un premier arbre (17) et un second arbre (18) destinés à être engagés d'une manière télescopique l'un dans l'autre et à porter respectivement les brides d'ancrage (15, 16).

7. Installation selon la revendication 6, dans laquelle les brides d'ancrage (15, 16) sont engagées sur les premier et second arbres (17, 18) respectivement à l'aide d'un premier et d'un second filetages, ayant des sens de vissage opposés, lesdits organes pour déplacement axial comprenant des dispositifs pour entraîner les arbres (17, 18) en rotation par rapport aux brides d'ancrage (15, 16).

8. Installation selon la revendication 6, dans laquelle les dispositifs de gonflage (42) comprennent au moins un conduit d'admission pneumatique (43) formé dans au moins un desdits premier arbre (17) et second arbre (18).

9. Installation selon la revendication 3, dans laquelle les dispositifs pour déployer la poche gonflable (14) comprennent des organes de commande opérant sur les dispositifs de gonflage (42) pour permettre l'admission de fluide sous pression dans la poche gonflable (14) dans un état gonflé.

10. Installation selon la revendication 4, dans laquelle des éléments de coulissement radial (26) associés auxdites brides d'ancrage (15, 16) permettent un mouvement radial des bords périphériques (14a) de la poche gonflable (14).

11. Installation selon la revendication 10, dans laquelle des organes de coulissement radial (26) comprennent, pour chaque bride d'ancrage (15, 16), une pluralité de blocs répartis sur le pourtour, qui sont guidés d'une manière coulissante dans une direction sensiblement radiale sur la bride d'ancrage (15, 16) et viennent faire corps avec le bord périphérique correspondant (14) de la poche gonflable.

12. Installation selon la revendication 11, comprenant des organes élastiques de rappel (35) agissant sur les blocs (27) pour les pousser contre un axe géométrique de la poche gonflable (14).

13. Installation selon la revendication 11, dans laquelle chaque bord périphérique (14a) de la poche gonflable (14) est enfermé entre lesdits blocs et une surface de butée radiale (37) définie dans la bride d'ancrage (15, 16).

14. Installation selon la revendication 13, dans laquelle la poche gonflable (14) est appuyée d'une manière coulissante et étanche contre la surface de butée radiale (37).

15. Installation selon les revendications 4 et 10, dans laquelle au moins un joint d'étanchéité périphérique (34) agissant contre la poche gonflable (14) est associé à chaque bride d'ancrage (15, 16) dans une position radialement externe par rapport aux organes de coulissement radial (26).

16. Installation selon la revendication 11, dans laquelle à chaque bride d'ancrage (15, 16) est associée au moins une membrane annulaire (36) ayant un bord périphérique radialement interne fixé d'une manière étanche à la bride d'ancrage (15, 16) dans une position radialement interne par rapport aux organes de coulissement radial (26), et un bord périphérique radialement externe fixé d'une manière étanche à la bride d'ancrage (15, 16) dans une position radialement externe par rapport aux organes de coulissement radial (26).

17. Installation selon la revendication 2, comprenant en outre des dispositifs (47) pour commander et maintenir la pression de gonflage de la poche gonflable (14) pendant l'assemblage des éléments constitutifs de la structure de carcasse construite (3) sur le support de construction (9) de carcasse.

18. Installation selon la revendication 17, dans laquelle lesdits dispositifs (47) pour commander et maintenir la pression de gonflage comprennent un réservoir pneumatique (47a) associé au support de construction (9) de carcasse, et des organes de commande (47b, 47c) en interconnexion avec le réservoir pour conserver une commande constante de la pression de gonflage de la poche gonflable (14) dans l'état gonflé.

19. Installation selon la revendication 2, comprenant en outre deux brides annulaires (37) destinées à être placées dans des positions respectivement opposées contre les surfaces latérales extérieures de la poche gonflable (14) et définissant chacune une surface de butée rigide pour la formation d'un talon (5) du pneumatique (2) en cours d'élaboration.

20. Installation selon la revendication 19, dans laquelle chaque bride annulaire (37) comporte des secteurs périphériques (38, 39) qui sont mobiles entre une position de travail dans laquelle ils ont une orientation sensiblement radiale par rapport à un axe géométrique de la poche gonflable (14), et une position de repos dans laquelle ils sont radialement en retrait pour permettre au pneumatique (2) d'être dégagé du support de construction (9) de carcasse.

21. Installation selon la revendication 20, dans laquelle chaque bride annulaire (37) comporte des premiers secteurs (38) et des seconds secteurs (39) qui sont répartis sur le pourtour en une suite alternée et sont respectivement au contact d'un premier moyeu (40) et d'un second moyeu (41) mobiles axialement l'un par rapport à l'autre.

22. Installation selon la revendication 2, dans laquelle auxdits dispositifs de gonflage (42) sont associés des organes servant à détecter la configuration géométrique de la poche gonflable (14), afin d'interrompre l'admission de fluide sous pression quand la poche gonflable (14) a atteint des dimensions prédéterminées.

23. Installation selon la revendication 22, dans laquelle lesdits organes de détection comprennent au moins un photoémetteur générant un faisceau lumineux destiné à être intercepté par la poche gonflable (14) dans un état gonflé, et un photorécepteur réglé pour recevoir le faisceau lumineux.

24. Installation selon la revendication 1, dans laquelle les dispositifs pour former les structures de carcasses construites (3) comprennent des organes pour poser successivement, sur le pourtour, des éléments de câblés caoutchoutés en forme de bandes sur le support de construction (9) de carcasse de manière à former au moins une nappe de carcasse.

25. Installation selon la revendication 1, dans laquelle les dispositifs pour former les structures de carcasses construites (3) comprennent des organes pour appliquer au moins un élément allongé continu résistant à une force de traction, sous la forme de spires superposées radialement autour d'un axe géométrique de rotation du support de construction (9) de carcasse, afin de former une structure annulaire d'ancrage (5a) au voisinage d'un bord périphérique intérieur de la structure de carcasse construite (3).

26. Installation selon la revendication 2, dans laquelle ledit poste de vulcanisation et de moulage (113) comprend :
- un moule de vulcanisation (13) de pneumatique ;
- des dispositifs pour transférer le support de construction (9) de carcasse dans le moule de vulcanisation (13) ;
- des dispositifs (50) pour le surgonflage de la poche gonflable (14) opérant dans ledit moule de vulcanisation (13) et aptes à être mis en marche afin d'imposer un déploiement radial supplémentaire à la poche gonflable (14), en partant de l'état de déploiement radial.

27. Installation selon la revendication 1, comprenant en outre des dispositifs pour appliquer des éléments de renforcement allongés rapportés s'étendant jusque dans des spires périphériques disposées axialement à proximité les uns des autres autour des structures annulaires de ceintures (6) portées par les structures de carcasses assemblées et les structures de carcasses construites (3).

28. Installation selon la revendication 1, dans laquelle ledit poste de travail (112) comporte des dispositifs pour former la bande de roulement (7) en enroulant autour de la structure de ceinture (6) un article semi-fini en matériau élastomère , lequel article a sensiblement la même largeur que la bande de roulement.

29. Procédé de fabrication de pneumatiques (2) comprenant les étapes consistant à :
- appliquer des éléments semi-finis sur un support d'assemblage (9a) de carcasse afin de former des structures de carcasses assemblées (3) ;
- appliquer une pluralité d'éléments constitutifs allongés élémentaires sur un support de construction (9) de carcasse afin de former des structures de carcasses construites (3) ;
- fabriquer des structures annulaires de ceintures (6) sur une chaîne de fabrication (12b) de ceintures ;
- appliquer au moins une desdites structures de ceintures (6) en position radialement externe sur chacune desdites structures de carcasses assemblées et desdites structures de carcasses construites (3) ;
- associer à chaque structure de ceinture annulaire une bande de roulement en position radialement externe ; et
- vulcaniser et mouler les pneumatiques ainsi obtenus.

30. Procédé selon la revendication 29, dans lequel lesdits éléments constitutifs élémentaires sont posés sur une poche gonflable (14) associée au support de construction (9) de carcasse et mise dans un état gonflé afin d'avoir une surface extérieure de celle-ci qui épouse par sa forme une surface intérieure desdites structures de carcasses construites (3).

31. Procédé selon la revendication 30, dans lequel l'application des structures de ceintures (6) sur les structures de carcasses construites (3) comporte les étapes consistant à :
- disposer la structure de ceinture (6) en position centrée coaxialement par rapport à la structure de carcasse construite (3) formée sur la poche gonflable (14) ;
- déployer radialement la poche gonflable (14) pour appliquer la structure de carcasse construite (3) contre la structure de ceinture (6).

32. Procédé selon la revendication 31, dans lequel la dilatation radiale de la poche gonflable (14) s'effectue par mouvement axial mutuel des bords périphériques (14) de la poche gonflable elle-même, espacés axialement les uns des autres.

33. Procédé selon la revendication 31 ou 32, dans lequel la dilatation radiale de la poche gonflable (14) s'effectue par admission d'un fluide sous pression dans celle-ci.

34. Procédé selon la revendication 31 ou 32, dans lequel, pendant la dilatation radiale, les bords périphériques (14a) de la poche gonflable (14) sont soumis à un mouvement radial centrifuge.

35. Procédé selon la revendication 34, dans lequel, lors de la transition entre l'état gonflé et l'état de déploiement radial, chaque bord périphérique (14a) de la poche gonflable (14) est guidé d'une manière coulissante et étanche dans une bride d'ancrage (15, 16) associée audit support de construction (9) de carcasse.

36. Procédé selon la revendication 29, comprenant en outre une étape consistant à presser la structure de ceinture (6) contre la structure de carcasse construite (3).

37. Procédé selon les revendications 31 et 36, dans lequel ladite étape de pressage s'effectue en même temps que ladite étape de déploiement radial.

38. Procédé selon la revendication 36 ou 37, dans lequel ladite étape de pressage s'effectue en exerçant une action de roulage ou de brossage sur la structure de ceinture (6).

39. Procédé selon la revendication 30, dans lequel la mise de la poche (14) dans l'état gonflé s'effectue par admission d'un fluide sous pression dans la poche gonflable (14), ledit procédé comprenant en outre l'étape consistant à maîtriser la configuration géométrique de la poche gonflable (14).

40. Procédé selon la revendication 39, dans lequel la régulation de la configuration géométrique de la poche gonflable (14) s'effectue par détection de l'interception d'au moins un faisceau lumineux par la poche gonflable (14) lorsque cette dernière atteint l'état gonflé.

41. Procédé selon la revendication 30, dans lequel, pendant l'étape d'assemblage des éléments constitutifs élémentaires de la structure de carcasse construite (3) sur le support de construction (9) de carcasse, au moins une commande de la pression de gonflage de la poches gonflable (14) est effectuée.

42. Procédé selon la revendication 29, dans lequel l'étape d'association de la bande de roulement (27) s'effectue en :
- formant un article semi-fini en élastomère ayant la même largeur que la bande de roulement (7) ; et
- enroulant ledit article semi-fini autour de la structure de ceinture (6).

43. Procédé selon la revendication 29, dans lequel l'étape d'association de la bande de roulement (7) s'effectue avant application de la structure de ceinture (6) sur la structure de carcasse assemblée ou la structure de carcasse construite (3).

44. Procédé selon la revendication 29, dans lequel l'étape d'association de la bande de roulement (7) s'effectue après application de la structure de ceinture (6) sur la structure de carcasse assemblée ou la structure de carcasse construite (3).

45. Procédé selon la revendication 30, dans lequel l'étape de vulcanisation et de moulage de chaque pneumatique fabriqué sur le support de construction (9) de carcasse comporte les étapes consistant à :
- retirer le pneumatique cru du support de construction (9) de carcasse;
- introduire le pneumatique cru (2) dans un moule de vulcanisation (13).

46. Procédé selon la revendication 30, dans lequel l'étape de vulcanisation et de moulage de chaque pneumatique fabriqué sur le support de construction (9) de carcasse comporte les étapes consistant à :
- introduire le pneumatique cru (2) et le support de construction (9) de carcasse dans un moule de vulcanisation (13) ;
- procéder à un surgonflage de la poche gonflable (14) pendant l'étape de vulcanisation et de moulage.

47. Procédé selon la revendication 46, dans lequel, pendant l'étape de surgonflage, les bords périphériques (14a) de la poche gonflable (14) sont soumis à un mouvement radial vers l'extérieur.

48. Procédé selon la revendication 45 ou 46, comprenant en outre une étape consistant à dégonfler la poche gonflable (14) pour permettre de dégager du pneumatique (2) le support de construction (9) de carcasse.

49. Procédé selon la revendication 30, comprenant en outre l'étape consistant à rapprocher latéralement de la poche gonflable (14) une paire de brides annulaires de butée (37), lesdites brides (37) définissant des surfaces d'appui pour des talons respectifs du pneumatique (2) en cours d'élaboration.

50. Procédé selon la revendication 29, dans lequel la formation de la structure de carcasse construite (3) comporte au moins une étape consistant à former une nappe (4) de carcasse en posant sur le support de construction (9) de carcasse, successivement sur le pourtour, des éléments en forme de bandes constitués par des câblés caoutchoutés.

51. Procédé selon la revendication 29, dans lequel la formation de la structure de carcasse construite (3) comporte au moins une étape consistant à former une structure annulaire d'ancrage (5a) près d'un bord périphérique intérieur de la structure de carcasse construite (3) en enroulant un élément allongé continu pour former des spires à superposition radiale.
